# EUROPÄISCHE PATENTSCHRIFT

(11) **EP 0 576 399 B1**
(45) Veröffentlichungstag und Bekanntmachung des Hinweises auf die Patenterteilung: **11.03.1998**
(21) Anmeldenummer: 93810435.3
(22) Anmeldetag: 17.06.1993
(51) Int. Cl.: G03D 13/00, G03D 15/00, G03B 27/32, G03B 27/46

(54) **Verfahren zum Betrieb einer fotografischen Verarbeitungsanlage und fotografische Verarbeitungsanlage**
Operating method for a photographic processing system and photographic processing system
Méthode de commande d'un système de traitement photographique et système de traitement photographique

(30) Priorität: 26.06.1992 CH 2023/92
(43) Veröffentlichungstag der Anmeldung: 29.12.1993
(73) Patentinhaber: GRETAG IMAGING AG, CH-8105 Regensdorf (CH)
(72) Erfinder: Stäheli, Willi, CH-5417 Untersiggenthal (CH); Tschannen, Rudolf, CH-8106 Regensdorf 2 (CH)
(74) Vertreter: Schwabe - Sandmair - Marx

(56) Entgegenhaltungen:
- EP-A- 0 443 443
- DE-A- 2 949 290
- DE-A- 3 623 084
- BRITISH KINEMATOGRAPHY SOUND AND TELEVISION SOCIETY JOURNAL Bd. 66, Nr. 2, Februar 1984, LONDON GB Seiten 58 - 60 NIGEL VARIAN 'a computerised film laboratory: economic reality or futuristic dream'

## Beschreibung

Die Erfindung betrifft ein Verfahren zum Betrieb einer fotografischen Verarbeitungsanlage gemäss Oberbegriff des Patentanspruchs 1. Weiters betrifft die Erfindung auch eine fotografische Verarbeitungsanlage gemäss Oberbegriff des Patentanspruchs 19.

Fotolabors, die belichtete Filmmaterialien bestimmter Typen, üblicherweise Negativfilme des 135-er Formats, in sehr grossen Mengen verarbeiten, geraten zunehmend unter den Druck ihrer Kunden, die ihre Aufträge in immer kürzerer Zeit erledigt haben wollen. Zu diesem Zweck werden die einzelnen Verarbeitungsschritte vom Eingang des belichteten Filmmaterials über die Erstellung der gewünschten Anzahl Kopien des gewünschten Formates, üblicherweise Papierbilder im Format von 7.6 cm x 11.4 cm (3" x 4.5") bis 12.7 cm x 19.5 cm (5" x 7.5"), bis hin zur Verpackung der Negative und der Papierbilder mit Hilfe von verschiedenen Hochgeschwindigkeitsmaschinen durchgeführt und teilweise noch von Hand unterstützt. Die einzelnen Maschinen arbeiten unabhängig von den anderen mit den ihnen eigenen Geschwindigkeiten. Eine fotografische Verarbeitungsanlage zur Durchführung der notwendigen Verfahrensschritte, wie sie heute üblicherweise in modernen Grosslabors eingesetzt wird und beispielsweise von der Anmelderin vertrieben wird, umfasst die folgenden Verarbeitungsmaschinen oder -stationen und Tätigkeiten:
- Film-Spleisser: die Filmdosen werden den Auftragstaschen entnommen, geöffnet und die Filme herausgezogen; eine Anzahl Filme wird zusammengespleisst und auf eine Spule aufgespult;
- Filmprozessor: die belichteten Filme werden entwickelt;
- Film-Notcher: die Bildpositionen auf dem Film werden detektiert und für die folgenden Bearbeitungsschritte mittels Kerbe (notch) auf dem Film markiert;
- Fotografisches Kopiergerät (Printer): die gewünschte Anzahl von Kopien der Negative auf dem entwickelten Film wird auf unbelichtetes Kopiermaterial (Fotopapier) aufbelichtet;
- Kopiermaterial Prozessor: das belichtete Kopiermaterial wird entwickelt;
- Endverarbeitung: die Filme werden in kurze Streifen (üblicherweise à vier Bilder) geschnitten; die einzelnen Bilder auf dem entwickelten bandförmigen Kopiermaterial werden geschnitten; Filmstreifen und zugehörige Bilder werden auftragszugeordnet wieder in die Auftragstaschen verpackt.

Das Filmmaterial bzw. das Kopiermaterial wird zwischen einzelnen Verarbeitungsmaschinen auf Rollen gespult und üblicherweise von Hand transportiert. Das Verwalten und Transportieren der Filmrollen bzw. der Kopiermaterialrollen und der Auftragstaschen ist Personal-intensiv und stellt oftmals eine Quelle von Fehlern dar, wenn einzelne Filmrollen, Papierrollen oder Auftragstaschenbündel verwechselt werden. Um die Anzahl der erforderlichen manuellen Transporte zwischen den einzelnen Verarbeitungsstationen zu reduzieren, werden die Rollen möglichst gross gemacht. Eine Filmrolle bzw. eine Kopiermaterialrolle wird erst dann zur nächsten Verarbeitungsstation transportiert, wenn sie voll ist. Dadurch entstehen für die einzelnen Kundenaufträge lange Durchlaufzeiten.

Film- und Kopiermaterialprozessoren arbeiten am wirtschaftlichsten, wenn sie mit konstanter Geschwindigkeit arbeiten und permanent mit Film oder mit Kopiermaterial beschickt werden. Falls nun die vorlaufenden Stationen langsamer als die jeweiligen Prozessoren arbeiten, müssen aufgrund der Tatsache, dass die Durchlaufzeiten (Entwicklungszeiten) des unentwickelten belichteten Filmmaterials bzw. des entsprechenden Kopiermaterials durch den gewählten Prozess fest vorgegeben sind, vor dem Starten der Prozessoren eine ausreichende Anzahl von Vorratsrollen produziert werden, um einen kontinuierlichen Betrieb der Prozessoren zu gewährliesten. Auf diese Weise wird die Durchlaufzeit eines Kundenauftrages durch die fotografische Verarbeitungsanlage noch weiter unnötig verlängert. Zudem wird der erforderliche Planungsaufwand hinsichtlich der Logistik und des Rollenmanagements nochmals vergrössert.

In der DE-A-36 23 084 wird eine automatische Fotoentwicklungsanlage offenbart, die mehrere aufeinanderfolgend angeordnete Behandlungsmaschinen umfasst. Um die unterschiedlichen Verarbeitungsgeschwindigkeiten der einzelnen Behandlungsmaschinen zu kompensieren, sind zwischen den einzelnen Maschinen kontinuierlich arbeitende In-Line-Schnittstellen-Speichereinheiten vorgesehen. Diese sind im wesentlichen grossvolumige Speichermagazine sehr grosser Kapazität, die von dem zu verarbeitenden Material on-line durchlaufen werden. Das Material wird von der vorlaufenden Behandlungsmaschine in eine solche kontinuierlich arbeitenden Speichereinheit eingespeist, in dieser serpentinenartig geführt und kontinuierlich an die nachlaufende Behandlungsmaschine abgegeben.

Die Aufgabe der vorliegenden Erfindung besteht daher darin, eine fotografische Verarbeitungsanlage und ein Verfahren zum Betrieb einer derartigen Anlage dahingehend zu verbessern, dass die Gesamtverarbeitungsgeschwindigkeit erhöht wird und so dem Kundenwunsch nach einer kürzeren Durchlaufzeit Rechnung getragen werden kann. Zudem sollen mögliche Fehlerquellen beseitigt werden und der Planungsaufwand hinsichtlich der Ablauflogistik vereinfacht werden. Es sollen eine Anlage und ein Betriebsverfahren geschaffen werden, welche es erlauben, die Verarbeitungsabläufe weitgehend zu automatisieren und den Personaleinsatz möglichst gering zu halten. Es sollen wirtschaftliche Konstant-Geschwindigkeits-Prozessoren einsetzbar sein, die gegenüber den Film- bzw. Kopiermaterialprozessoren mit variabler Geschwindigkeit und variabler Durchlaufstrecke konstruktiv einfacher und weniger fehleranfällig sind und einen geringeren Investitionsaufwand erfordern. Darüber hinaus sollen Kundenaufträge mit hoher Geschwindigkeit preiswert bearbeitet werden können.

All diese und noch weitere damit zusammenhängende Aufgaben werden durch ein Verfahren mit den im Patentanspruch 1 angeführten Verfahrensschritten und durch eine fotografische Verarbeitungsanlage gelöst, welche die im Patentanspruch 19 angeführten Merkmale aufweist. Besonders vorteilhafte Verfahrensvarianten und besonders bevorzugte Ausführungsvarianten der erfindungsgemässen Verarbeitungsanlage sind Gegenstand der jeweiligen abhängigen Verfahrens- bzw. Vorrichtungsansprüche.

Insbesondere wird durch die Erfindung ein Verfahren zum Betrieb einer fotografischen Verarbeitungsanlage geschaffen, welches es erlaubt, die Durchlaufzeit eines Kundenauftrages durch die Anlage zu optimieren. Die erfindungsgemässe fotografische Verarbeitungsanlage umfasst verschiedene Verarbeitungsmodule für belichtetes fotografisches Filmmaterial und/oder fotografisches Kopiermaterial. Die einzelnen Verarbeitungsmodule werden je nach Bedarf nacheinander vom Filmmaterial bzw. vom Kopiermaterial durchlaufen, wobei das Filmmaterial bzw. das Kopiermaterial in Rollenform off-line vom einen zum anderen Verarbeitungsmodul gelangt. Bei der erfindungsgemässen Verarbeitungsanlage umfasst wenigstens ein Verarbeitungsmodul eine vorgeschaltete erste und eine dieser über einen Pufferspeicher für das Filmmaterial bzw. das Kopiermaterial nachgeschaltete zweite Verarbeitungsstation, welche vom Filmmaterial bzw. vom Kopiermaterial mit im wesentlichen konstanter Verarbeitungsgeschwindigkeit durchlaufen werden muss, so dass das Filmmaterial bzw. das Kopiermaterial dieses Verarbeitungsmodul on-line durchläuft. Im folgenden wird für den Begriff "Puffer" auch die aus dem Englischen stammende Bezeichnung "Buffer" verwendet. Das erfindungsgemässe Betriebsverfahren für die fotografische Verarbeitungsanlage ist insbesondere dadurch gekennzeichnet, dass der Transport des Filmmaterials bzw. des Kopiermaterials in und zwischen den Verarbeitungsmodulen der Verarbeitungsanlage hierarchisch zweistufig gesteuert wird. Auf der unteren Hierarchiestufe wird mittels einer im genannten wenigstens einen Verarbeitungsmodul angeordneten lokalen Steuerung die Verarbeitungsgeschwindigkeit der vorgeschalteten ersten Verarbeitungsstation nach Massgabe der nachgeschalteten zweiten Verarbeitungsstation lokal gesteuert. Auf der oberen Hierarchiestufe werden mittels einer der lokalen Steuerung übergeordneten zentralen Steuereinheit zentrale Steuerungsfunktionen ausgeführt, die Funktion der einzelnen Verarbeitungsmodule wird überwacht, und die Übergabe des Filmmaterials bzw. Kopiermaterials zwischen den Verarbeitungsmodulen wird im Hinblick auf eine Optimierung des Durchsatzes des Filmmaterials bzw. des Kopiermaterials durch die gesamte Verarbeitungsanlage gesteuert. Die lokale Steuerung in den einzelnen Verarbeitungsmodulen löst alle zeitkritischen Operationen und Aufgaben selbsttätig und erlaubt damit auf der übergeordneten Steuerungs-Ebene in der zentralen Steuerung eine zeitunkritische Realisierung der Optimierung.

Vorzugsweise arbeitet die lokale Steuerung nach dem "Herr-Sklave"- (master-slave) Prinzip und läuft nach dem Starten des Betriebes des entsprechenden Verarbeitungsmoduls autonom und vollautomatisch ab.

Die Verarbeitungsanlage umfasst beispielsweise wenigstens ein Modul mit einem fotografisches Kopiergerät und mit einem Kopiermaterialprozessor mit vorgeschaltetem Kopiermaterialbuffer für die Entwicklung des belichteten Kopiermaterials, welche über Signalleitungen miteinander verbunden sind. Die Verarbeitungsgeschwindigkeit des Kopiermaterials im fotografischen Kopiergerät wird mit Hilfe der autonomen lokalen Steuerung nach Massgabe der vorgegebenen konstanten Durchlaufgeschwindigkeit des Kopiermaterialprozessors und des Füllstandes des Kopiermaterialbuffers lokal gesteuert.

Für den Fall, dass ein Verarbeitungsmodul mit einer Filmöffnungs- und Spleissstation sowie mit einem zugeordneten Filmprozessor mit vorgeschaltetem Filmbuffer für die Entwicklung des belichteten Filmmaterials vorgesehen ist, sorgt die lokale Steuerung dieses Moduls dafür, dass die Verarbeitungsgeschwindigkeit des Filmmaterials in der Filmöffnungs- und Spleissstation nach Massgabe der vorgegebenen konstanten Durchlaufgeschwindigkeit des Filmprozessors und des Füllstandes des Filmbuffers lokal gesteuert wird.

Vorzugsweise weist die fotografische Verarbeitungsanlage beide vorstehend beschriebenen Verarbeitungsmodule auf. Dabei ist das Modul, welches das fotografische Kopiergerät umfasst, im Anschluss an den Filmmaterialprozessor angeordnet.

Besonders vorteilhaft ist es, wenn die Verarbeitungsgeschwindigkeit des Filmmaterials in der Filmöffnungs- und Spleissstation bzw. des Kopiermaterials im fotografischen Kopiergerät derart gesteuert wird, dass der Füllstand des jeweiligen Buffers etwa 80 % bis etwa 99 % beträgt. Auf diese Weise können kurzzeitige Unterbrechungen der vorangehenden Verarbeitungsstationen kompensiert werden, und der jeweilige Prozessor kann mit der durch den gewählten Entwicklungsprozess fest vorgegebenen Geschwindigkeit weiterlaufen. Beispielsweise können auf diese Weise kurzzeitige Unterbrechungen in der Filmöffnungs- und Spleissstation kompensiert werden, die auftreten, wenn ein Spleiss nicht auf Anhieb korrekt ausgeführt werden kann oder wenn Filme als beschädigt oder als typenfremd erkannt werden und repariert oder ausgeschieden werden müssen. Zu diesem Zweck kann die Filmöffnungs- und Spleissstation noch mit einer automatischen Film-Inspektionsstation ausgestattet sein, in welcher diese Überprüfungs- und Reparierfunktionen ausgeführt werden.

Bei einer längeren Unterbrechung der Film- bzw. Kopiermaterialzufuhr, wenn der Füllstand des entsprechenden Buffers eine vorgegebene Marke unterschreitet, wird eingangs des jeweiligen Buffers automatisch ein Leaderband an das Film- bzw. Kopiermaterialende angespleisst, welches ausgangs des Film- bzw. Kopiermaterialprozessors wieder abgetrennt und zum Eingang des jeweiligen Buffers zurücktransportiert wird. Der Minimalfüllstand des Buffers ist dabei so gewählt, dass die bis zur vollständigen Entleerung des Buffers zur Verfügung stehende Zeitspanne auf jeden Fall ausreicht, den Spleissvorgang auszuführen. Vorzugsweise beträgt der Minimalfüllstand des jeweiligen Buffers etwa 5 % bis etwa 25 % des maximalen Füllstandes, je nach Grösse des Bufferspeichers. Bei Wiederaufnahme der Film- bzw. Kopiermaterialzufuhr an den jeweiligen Buffer wird das das Leaderband eingangs des entsprechenden Buffers abgeschnitten, das Vorderende des herantransportierten Film-bzw. Kopiermaterials an das Hinterende des Leaderbandes angespleisst und ausgangs des Film- bzw. des Kopiermaterialprozessors das Vorderende des Film- bzw. Kopiermaterialbandes wieder vom Leaderband getrennt und das Leaderband auf eine separate Rolle aufgewickelt. Es kann auch vorgesehen sein, das herantransportierte neue Vorderende des Film- bzw. Kopiermaterialbandes an das Hinterende des in diesem Falle in der Station wartenden vorhergehenden Film- bzw. Kopiermaterialbandes anzuspleissen.

Zu diesem Zweck ist die fotografische Verarbeitungsanlage eingangs des jeweiligen Buffers mit einer automatischen Schneide- und Spleissvorrichtung ausgestattet und weist ober- oder unterhalb der Schneide- und Spleissvorrichtung wenigstens eine Andockeinrichtung für ein vorzugsweise auf eine Rolle gewickeltes Leaderband auf.

Ausgangs des zugehörigen Prozessors ist ebenfalls eine automatische Schneidevorrichtung und gegebenenfalls auch eine automatische Spleissvorrichtung vorgesehen, sowie eine Andockvorrichtung für eine Aufwickelrolle für das Leaderband. Vorzugsweise ist ausgangs des Film- bzw. Kopiermaterialprozessors eine Andockeinrichtung für Rollen und eine Wickelvorrichtung zum Aufwickeln des Film- bzw. Kopiermaterials auf die Rollen angeordnet. Auf diese Weise kann das Film- bzw. Kopiermaterial ausgangs des jeweiligen Prozessors auf Rollen aufgewickelt werden. Film- bzw. Kopiermaterialrollen eignen sich besonders gut als platzsparende Speicher für grosse Mengen des zu verarbeitenden Materials und erlauben auf einfache Weise manuelle Eingriffe zur Fehlerbehebung.

Insbesondere überwacht und steuert die zentrale Steuereinheit den Füllgrad der ausgangs der jeweiligen Prozessoren angeordneten Film- bzw. Kopiermaterialrollen je nach Auslastungsgrad der Verarbeitungsstationen. Das heisst, je nach Bedarf werden ausgangs der jeweiligen Prozessoren mehr oder weniger gefüllte Rollen erstellt. Kriterium für den Füllgrad der Rollen ist nicht mehr der Transportweg bzw. die Transportzeit zwischen den einzelnen Stationen, was bisher dazu geführt hat, dass die Rollen immer möglichst vollständig gefüllt wurden und damit die Verweilzeit eines Kundenauftrags in der Verarbeitungsanlage unnötig verlängert wurde. Nunmehr überwacht die zentrale Steuerung den Auslastungsgrad der einzelnen beteiligten Verarbeitungsmodule und steuert danach den Füllgrad der Rollen. Auf diese Weise kann kurzfristig auf Geschwindigkeitsschwankungen der beteiligten Stationen reagiert werden.

Besonders vorteilhaft bei diesem Steuerungskonzept ist es, wenn die Rollen mit Hilfe vollautomatischer Transportvorrichtungen von einem Verarbeitungsmodul zum nächsten transportiert werden. Dabei steuert die zentrale Steuereinheit den Transport der Rollen je nach Bedarf und Auslastungsgrad der beteiligten Verarbeitungsmodule, und die Transportvorrichtungen werden als Bufferspeicher eingesetzt.

Vorzugsweise wird das Filmmaterial ausgangs des fotografischen Kopiergerätes auf Rollen aufgewickelt. Dabei steuert die zentrale Steuereinheit den Aufwickelvorgang des Filmmaterials einerseits und den Aufwickelvorgang des Kopiermaterials ausgangs des Kopiermaterialprozessors andererseits derart, dass zu jeweils einer Filmmaterialrolle eine Kopiermaterialrolle mit zugeordneten Kopien erstellt wird, wobei die Filmrolle und die Kopiermaterialrolle dieselbe Reihenfolge verschiedener Kopiervorlagen bzw. Kopien aufweisen. Die Anordnung der Kopiervorlagen und der zugehörigen Kopien auf den entsprechenden Rollen ist dabei derart, dass die zeitliche Bearbeitungsabfolge erhalten bleibt. Das heisst, dass die zuerst in die Verarbeitungsanlage eingegebene Kopiervorlage auf der Rolle aussen ist. Entsprechendes gilt natürlich auch für die zugehörigen Kopien.

Bei einer vollständig integrierten fotografischen Verarbeitungsanlage, die als letztes Verarbeitungsmodul eine vorzugsweise vollautomatische Schneide- und Verpackungsstation umfasst, steuert die zentrale Steuereinheit den Transport der Filmrollen vom fotografischen Kopiergerät und den Transport der Kopiermaterialrollen vom Ausgang des Kopiermaterialprozessors derart, dass zugeordnete Film- und Kopiermaterialrollen im wesentlichen gleichzeitig bei der Schneide- und Verpackungstation ankommen. Vorzugsweise erfolgt der Transport der Filmmaterialrollen vom fotografischen Kopiergerät bzw. der Kopiermaterialrollen vom Kopiermaterialprozessor zu der Schneide- und Verpackungstation mit Hilfe vollautomatischer Transportvorrichtungen, die von der zentralen Steuerung gesteuert betrieben werden und die Funktion von Transportbuffern erfüllen. Sind keine vollautomatischen Transportvorrichtungen vorgesehen, und müssen die Rollen manuell transportiert werden, gibt die zentrale Steuerung beispielsweise entsprechende Signale an den oder die Operator. Diese Signale können akkustische Signale sein, es kann aber auch eine Anzeige auf einem Bildschirm erfolgen, oder eine Kombination von beidem vorgesehen sein, um den oder die Operater auf einen erforderlichen Rollentransport hinzuweisen.

Vorzugsweise wird mit Hilfe der zentralen Steuerung auch der Transport der Auftragstaschen für die Filmrollen, denen in der Filmöffnungs- und Spleissstation die erforderlichen Auftragsdaten entnommen werden, von der Filmöffnungs- und Spleissstation über vorzugsweise vollautomatische Transportmittel zum Schneide- und Verpackungsmodul derart gesteuert, dass die Reihenfolge der Auftragstaschen der Reihenfolge der Kopiermaterialstreifen auf den Kopiermaterialrollen entspricht, die zum Schneide- und Verpackungsmodul transportiert werden.

Besonders vorteilhaft ist es, wenn die einzelnen Verarbeitungsmodule und -stationen über die Signalleitungen, welche vorzugsweise einen Datenaustausch in beide Richtungen erlauben, an die zentrale Steuereinheit Informationen über einen gerade in der jeweiligen Station befindlichen Kundenauftrag übermittelt, sodass mit Hilfe der zentralen Steuereinheit jederzeit ein bestimmter Kundenauftrag innerhalb der fotografischen Verarbeitungsanlage lokalisiert werden kann.

Um die Durchlaufzeit eines Kundenauftrags durch die fotografische Verarbeitungsanlage möglichst kurz zu halten, sind die Anlage und das Betriebsverfahren darauf ausgelegt, dass der zuerst in die fotografische Verarbeitungsanlage eingespeiste Kundenauftrag diese auch als erster in bearbeitetem Zustand verlässt.

Vorzugsweise registriert die zentralen Steuerung die im fotografischen Kopiergerät bestimmten Lagekoordinaten der einzelnen Kopiervorlagen auf dem Filmmaterialstreifen. Diese Daten werden von der zentralen Steuerung an die Schneide- und Verpackungsstation weitergeleitet, wo sodann der Filmmaterialstreifen an der richtigen Stelle geschnitten wird. Auf diese Weise kann auf eine Notcheinrichtung im fotografischen Kopiergerät, welche Markierungen in den Filmmaterialstreifen stanzt, verzichtet werden.

Für den Fall, dass im fotografischen Kopiergerät auch die Nummer der einzelnen Kopiervorlagen auf dem Filmmaterialstreifen erfasst wird, beispielsweise durch Lesen der auf den Filmmaterialstreifen angeordneten erweiterten DX-Codes, ist es weiters sehr vorteilhaft, diese Informationen mit der zentralen Steuerung zu registrieren. Die Daten werden von der zentralen Steuerung beispielsweise an die Schneide- und Verpackungsstation weitergeleitet, wo beispielsweise mit Hilfe einer Druckereinrichtung die entsprechende Vorlagennummer auf die Vorder- oder auf die Rückseite der zugehörigen Kopie(n) aufgedruckt werden kann.

Die Steuerung der erfindungsgemässen fotografischen Verarbeitungsanlage ist hierarchisch zweistufig aufgebaut. Dabei ist für die einzelnen Verarbeitungsmodule eine lokale Steuerung vorgesehen, welche alle zeitkritischen Aufgaben des entsprechenden Moduls weitgehend autonom steuert. Die Kombination der Stationen in den einzelnen Verarbeitungsmodulen stellt somit autonom jeweils gewisse Grundfunktionen zur Verfügung. Eine übergeordnete zentrale Steuerung kann auf diesen Grundfunktionen aufbauend den Verarbeitungsbetrieb in der gesamten fotografischen Verarbeitungsanlage überwachen und bezüglich der Durchlaufzeit und der Auslastung der einzelnen Stationen optimieren.

Insbesondere ist wenigstens das fotografische Kopiergerät in die Optimierung des Gesamtablaufes einbezogen. Zu diesem Zweck weist das fotografische Kopiergerät eingangs und ausgangs des fotografischen Kopiergerätes Andockvorrichtungen für auf Rollen gewickeltes bzw. zu wickelndes Filmmaterial auf, und ist eingangs des Kopiergerätes eine Anstelleinrichtung für wenigstens eine, auf eine Rolle gewickeltes, unbelichtetes fotografisches Kopiermaterial enthaltende Kassette vorgesehen. In Verbindung mit angeschlossenen vorzugsweise vollautomatischen Transportvorrichtungen für die Filmmaterialrollen und ggf. sogar für die Kopiermaterialkassetten kann die zentrale Steuerung den Einsatz und die Auslastung des fotografischen Kopiergerätes in die Optimierung miteinbeziehen.

Im folgenden wird die Erfindung mit allen ihr als wesentlich erscheinenden Einzelheiten anhand eines Ausführungsbeispiels unter Bezugnahme auf die schematischen Zeichnungen näher erläutert. Es zeigen:
- Fig. 1: eine Übersichtsdarstellung einer integrierten fotografischen Verarbeitungsanlage,
- Fig. 2: ein Blockschema der Verarbeitungsanlage gemäss Fig. 1,
- Fig. 3: ein ein fotografisches Kopiergerät und einen Kopiermaterialprozessor umfassendes Verarbeitungsmodul und
- Fig. 4a und 4b: zwei Ablaufschemata des erfindungsgemässen Verfahrens zum Betrieb einer fotografischen Verarbeitungsanlage gemäss Fig. 1.

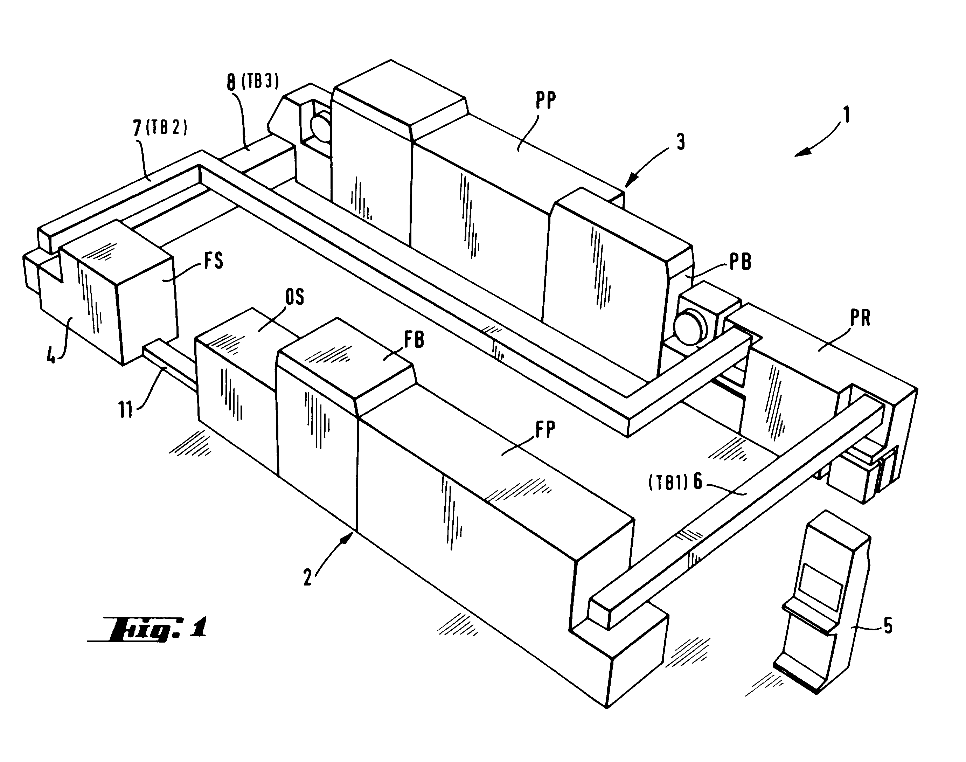

In Fig. 1 ist ein Ausführungsbeispiel der erfindungsgemässen fotografischen Verarbeitungsanlage dargestellt. Die Verarbeitungsanlage ist gesamthaft mit dem Bezugszeichen 1 versehen und umfasst verschiedene Verarbeitungsmodule 2, 3 und 4. Jedes Verarbeitungsmodul umfasst wiederum mindestens eine Verarbeitungsstation, mit Hilfe welcher ein bestimmter Arbeitsschritt während der Bearbeitung eines Kundenauftrages ausgeführt wird. Insbesondere umfasst das erste Verarbeitungsmodul 2 eine Filmöffnungs- und Spleissstation OS sowie im Anschluss daran angeordnet einen Filmprozessor FP. Die Filmöffnungs- und Spleissstation kann noch um eine vorzugsweise automatische Film-Inspektionsstation erweitert sein, welche Überprüfungs- und Reparaturfunktionen für das Filmrollenmaterial erfüllt. Zwischen der Filmöffnungs- und Spleissvorrichtung OS und dem Filmprozessor FP ist ein Filmbuffer FB integral mit dem Filmprozessor verbunden. Ein zweites Verarbeitungsmodul ist in Fig. 1 mit dem Bezugszeichen 3 versehen und ist im Anschluss an das erste Verarbeitungsmodul 2 angeordnet. Es umfasst ein fotografisches Kopiergerät (fotografischer Printer) PR und einen im Anschluss an das Kopiergerät angeordneten Kopiermaterialprozessor PP. Der an das fotografische Kopiergerät PR anschliessende Teil des Kopiermaterialprozessors PP ist als Kopiermaterialbuffer PB ausgebildet. Schliesslich wird die ausgangsseitige Verarbeitungsvorrichtung 4 der Verarbeitungsanlage 1 durch eine Schneide- und Verpackungsvorrichtung FS gebildet. Bei dem Filmprozessor FP und bei dem Kopiermaterialprozessor PP handelt es sich vorzugsweise um sogenannte Konstant-Geschwindigkeits-Prozessoren mit konstanter Länge der Durchlaufstrecke des Filmmaterials bzw. des Kopiermaterials durch den jeweiligen Nassteil. Derartige Prozessoren sind relativ einfach in ihrem Aufbau, zuverlässig, vielfach erprobt und relativ preisgünstig.

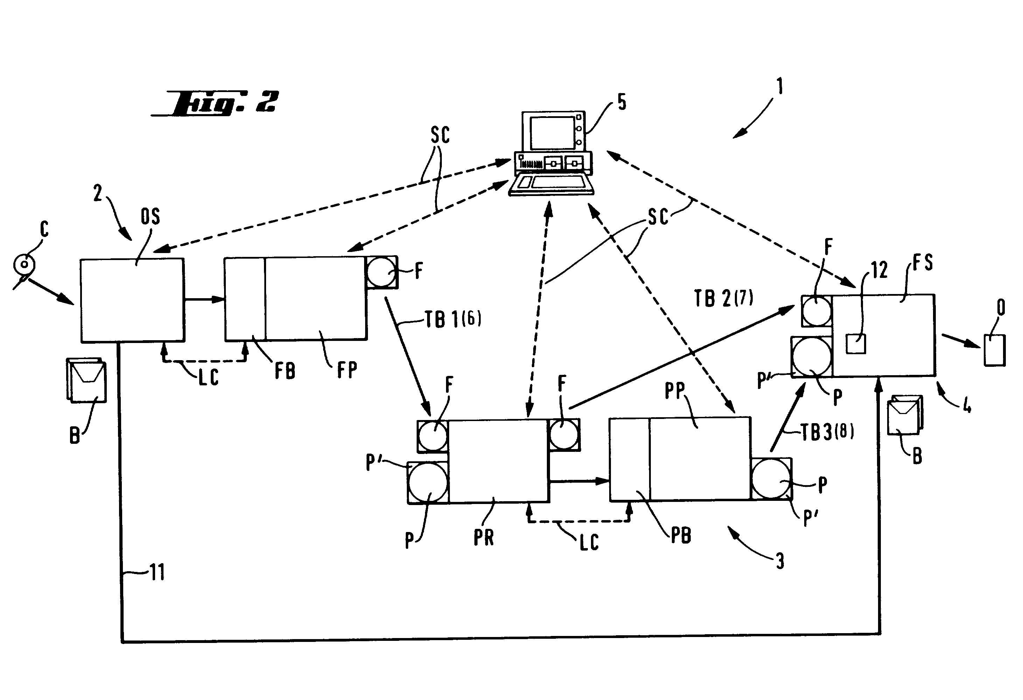

Der Durchlauf von Kundenaufträgen durch die fotografische Verarbeitungsanlage wird anhand von Fig. 2 näher erläutert. Eingangsseitig der fotografischen Verarbeitungsanlage 1 werden vom Kunden gelieferte Auftragstaschen B mit Filmpatronen C üblicherweise von einem Operator geöffnet, die Filmpatronen C entnommen, vorzugsweise in eine Filmpatronen-Magazin eingefüllt und in die zum ersten Verarbeitungsmodul 2 gehörige Filmöffnungs- und Spleissstation OS gegeben. Dabei erfolgt bereits eine erste Vorselektion falscher Filmpatronen, die vom Operator samt der zugehörigen Auftragstasche B ausgeschieden werden. Die üblicherweise auf der Auftragstasche B enthaltenen Informationen zu dem jeweiligen Kundenauftrag werden über Eingabemittel an eine zentrale Steuereinheit 5 (Fig. 1 und Fig. 2) mitgeteilt. Die Auftragstaschen B werden vorzugsweise gebündelt zu einer Verpackungsstation FS transportiert. Vorzugsweise erfolgt dieser Transport über automatische Transporteinrichtungen 11, beispielsweise über Förderbänder oder ähnliches.

In der Filmöffnungs- und Spleissstation OS wird jede Patrone geöffnet und der Film wird automatisch herausgezogen. Für den Fall, dass eine automatische Film-Inspektionsstation vorgesehen ist, wird der Film geprüft und bei Bedarf repariert bzw. aus dem Prozess ausgeschieden. Die für gut befundenen bzw. reparierten einzelnen Filmmaterialstreifen werden zu einem Band zusammengespleisst. Das Filmmaterial N wird sodann als langes Band über den Buffer FB in den Filmprozessor FP geführt, um darin entwickelt zu werden. Nach der Entwicklung wird das Filmmaterial N ausgangs des Filmprozessors FP zu einer Filmrolle F gewickelt und bei einem bestimmten Füllstand automatisch geschnitten. Die Filmrollen F werden entlang einer Transportbahn 6 zum nächsten Verarbeitungsmodul 3 transportiert und für die weitere Verarbeitung eingangs des fotografischen Kopiergerätes PR angeordnet.

Das noch unbelichtete Kopiermaterial M, üblicherweise unbelichtetes Fotopapier, wird dem Kopiergerät auf Rollen gewickelt und in Kassetten P' angeordnet zugeführt. Wenn eine Kassette P' leer ist, wird vorzugsweise automatisch eine neue gefüllte Kassette P' angedockt und das neue Kopiermaterial mit dem alten gespleisst, sodass das Kopiergerät praktisch endlos mit Kopiermaterial M beschickt werden kann. Das entwickelte Filmmaterial N wird auftragsgemäss auf das Kopiermaterial M aufbelichtet. Das belichtete Kopiermaterial M wird sodann als endloses Band über den Kopiermaterialbuffer PB dem Kopiermaterialprozessor PP zugeführt und entwickelt. Nach der Entwicklung wird das belichtete und entwickelte Kopiermaterial M ausgangs des Kopiermaterialprozessors PP zu einer Rolle P gewickelt, die vorzugsweise in einer Kassette enthalten ist, und bei einem bestimmten Füllstand automatisch geschnitten. Das Filmmaterial N wird ausgangs des fotografischen Kopiergerätes PR gleichfalls zu einer Rolle F gewickelt.

Die Filmmaterialrollen F werden entlang des Transportweges 7 und die Kopiermaterialkassetten P entlang des Transportweges 8 zum letzten Verarbeitungsmodul 4 transportiert, welches die Schneide- und Verpackungsstation FS umfasst. Dort werden das Filmmaterial N und das Kopiermaterial M geschnitten und zuordnungsgerecht in die über den Transportweg 11 angelieferten Auftragstaschen B verpackt. Am Ausgang der fotografischen Verarbeitungsanlage 1 können sodann die fertig bearbeiteten Kundenaufträge O mit den in die Auftragstaschen B verpackten Filmstreifen und den gewünschten Kopien entnommen werden.

Die in den Fig. 1 und 2 mit den Bezugszeichen 6, 7, 8 bzw. mit 11 bezeichneten Transportwege symbolisieren Transportvorrichtungen für das zu Rollen F gewickelte Filmmaterial, für die Kopiermaterialrollen P bzw. für die vorzugsweise gebündelten Auftragstaschen B von einem Modul zum nächsten. Die Transportvorrichtungen 6, 7, 8 und 11 sind vorzugsweise für einen vollautomatischen Betrieb ausgebildet und können beispielsweise Transportbänder, Transportlifte und ähnliches oder Kombinationen verschiedener Transporteinrichtungen sein.

Die Funktion der in den Fig. 1 und 2 dargestellten vorzugsweise elektronischen Steuereinheit 5 wird im Zusammenhang mit dem erfindungsgemässen Betriebsverfahren nachstehend noch näher erläutert.

Die beschriebene fotografische Verarbeitungsanlage weist eine Reihe von Verarbeitungsstationen auf, die allesamt mit weitgehend unterschiedlichen Geschwindigkeiten betrieben werden. Insbesondere ist zu berücksichtigen, dass der Prozessor FP für das Filmmaterial N und der Prozessor PP für das Kopiermaterial M jeweils mit vorgegebener konstanter Geschwindigkeit arbeiten müssen, um ein gleichmässiges Entwickeln des Filmmaterials bzw. des Kopiermaterials zu gewährleisten. Das System von Prozessoren kann also eigentlich nur dann ausgeglichen arbeiten, wenn das Verhältnis von Filmlänge zu kopierter Kopiermateriallänge konstant ist. Dies ist jedoch praktisch nie der Fall und die zu einem entsprechenden Film kopierte Kopiermateriallänge schwankt auftragsbedingt. Einerseits ist die kopierte Kopiermateriallänge grösser bei langen Bildformaten oder im Falle von Mehrfachkopien von einer Vorlage, andererseits ist sie geringer bei kurzen Bildformaten und im Fall, dass Vorlagen aufgrund ihrer schlechten Qualität übersprungen werden.

Erfindungsgemäss wird daher bei Bedarf die mittlere Geschwindigkeit des Filmmaterials N im Filmprozessor FP oder des Kopiermaterials M im Kopiermaterialprozessor PP durch lückenhaften Betrieb reduziert. Dies wird durch eine hierarchische zweistufige Steuerung realisiert. Eine lokale Steuerung LC zwischen Prozessor und Vorgängermaschine steuert die Geschwindigkeit der Vorgängermaschine solange ausreichend Material im jeweiligen dazwischengeschalteten Buffer vohanden ist, dass der Prozessor mit der erforderlichen Geschwindigkeit arbeiten kann, und fügt automatisch ein Leaderband L ein, wenn der Füllstand des entsprechenden Buffers einen bestimmten Wert unterschreitet. Eine übergeordnete zentrale Steuerung SC bestimmt den optimalen Zeitpunkt für den Wechsel der Filmrollen F bzw. der Kopiermaterialrollen P und für den Einschub von Lücken. Die lokale Steuerung erfolgt über einfache Signalleitungen zwischen den betroffenen Vorrichtungen und ist in die Verarbeitungsmodule integriert.

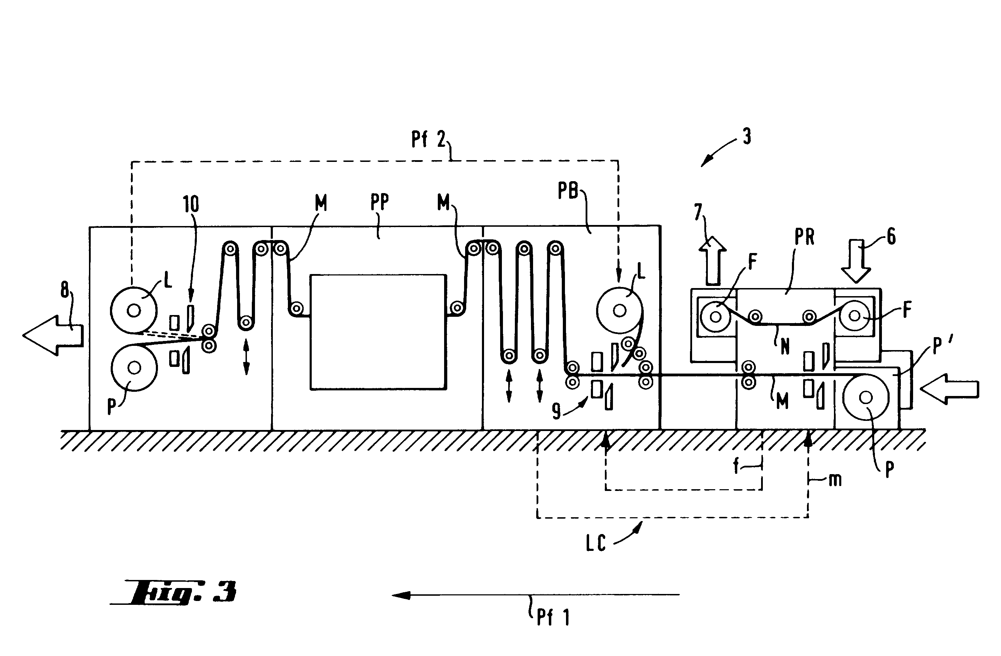

Das Konzept der lokalen Steuerung LC wird im folgenden unter Bezugnahme auf die Fig. 3 anhand des zweiten Verarbeitungsmoduls 3 näher erläutert. Das zweite Verarbeitungsmodul 3 umfasst das fotografische Kopiergerät PR und den Kopiermaterialprozessor PP mit vorrgeschaltetem Kopiermaterialbuffer PB. Der Materialfluss in dieser Verarbeitungsstation 3 ist mit dem Pfeil Pf 1 angedeutet. Der Kopiermaterialbuffer PB eingangs des Kopiermaterialprozessors PP ist vorzugsweise als Schlaufenspeicher ausgelegt. Ein Sensor liefert ein Signal, wenn der Buffer kurz vor seinem maximalen Füllstand steht. Die Kopiergeschwindigkeit des Kopiergerätes PR wird nun durch den Kopiermaterialprozessor PP derart gesteuert, dass der Buffer vorzugsweise immer zu etwa 80 % bis zu etwa 99 % voll ist. Bei kurzen Unterbrechungen des Kopiervorganges im Kopiergerät wird der Bufferinhalt etwas abgebaut und anschliessend nach Wiederinbetriebnahme des Kopiergerätes PR durch erhöhte Kopiergeschwindigkeit wieder auf den ursprünglichen Füllstand gebracht. Wenn aber das Kopiergerät beispielsweise aufgrund von fehlendem Filmmaterial F kein belichtetes Kopiermaterial M mehr an den Prozessor PP liefern kann, wird ein Mindestfüllstand im Kopiermaterialbuffer PB unterschritten und ein Sensor liefert ein weiteres Signal. Durch dieses Signal wird in einer eingangs des Buffers PB angeordneten Schneide- und Spleissvorrichtung 9 ein Leaderband L an das Hinterende des Kopiermaterials M angespleisst. Das Leaderband L wird von einer ober- oder unterhalb der Schneide- und Spleissvorrichtung 9 angeordneten Vorratsrolle abgespult. Auf diese Weise kann trotz der Unterbrechung des Kopierbetriebes im Kopiergerät PR das Kopiermaterial M mit konstanter Geschwindigkeit durch den Kopiermaterialprozessor PP, insbesondere durch dessen Nassteil, weitertransportiert werden. An der Ausgangsseite des Kopiermaterialprozessors PP ist vorzugsweise eine weitere Schneide- und Spleissvorrichtung 10 angeordnet, deren Aufbau der eingangsseitigen entspricht. Prinzipiell würde ausgangsseitig auch eine Schneidestation allein ausreichen. Dort wird das Leaderband L wieder vom Kopiermaterial abgeschnitten und vorzugsweise auf eine Rolle aufgewickelt.

Wenn das Kopiergerät PR wieder Kopiermaterial M liefern kann, wird dieses automatisch in die Transportbahn bis zur Schneide- und Spleissstation 9 eingefädelt. Dort wird das Leaderband abgeschnitten und das Vorderende des neuen Kopiermaterials M an das Hinterende des Leaderbandes L angespleisst. Ausgangseitig des Kopiermaterialprozessors PP wird das Leaderband L vom entwickelten Kopiermaterial M getrennt und aufgewickelt. Die Rolle mit dem aufgewickelten Leaderband L kann wieder an die Eingangsseite des Kopiermaterialbuffers PB zurücktransportiert werden, wie durch den Pfeil Pf 2 in Fig. 3 angedeutet ist. Das Vorderende des entwickelten neuen Kopiermaterials kann an das Hinterende des in der Station wartenden entwickelten Kopiermaterials angespleisst werden oder einer neuen Aufwickelrolle zugeführt werden.

Das Prinzip der lokalen Steuerung LC, welches anhand des Beispiels des zweiten Verarbeitungsmoduls 3 mit Kopiergerät und Kopiermaterialprozessor PP erläutert worden ist, ist nach dem Herr-Sklave (master-slave) Prinzip aufgebaut. Der Prozessor PP ist der Herr, die vorangehende Verarbeitungsstation, in diesem Fall das fotografische Kopiergerät PR ist der Sklave. Selbstverständlich ist dieses Prinzip in analoger Weise im ersten Verarbeitungsmodul 2, welche die Öffnungs- und Spleissstation OS und den Filmprozessor FP umfasst, realisiert. In diesem Fall wird die Geschwindigkeit der Öffnungs- und Spleissstation OS - der vorangehenden Verarbeitungsstation - durch den nachgeschalteten Filmprozessor FP gesteuert. Je nach Füllstand des eingangs des Filmprozessors FP angeordneten Fimbuffers FB wird die Geschwindigkeit der vorangehenden Öffnungs- und Spleissstation OS variiert. Bei längeren Unterbrechungen wird analog zu der anhand des zweiten Verarbeitungsmoduls 3 beschriebenen Vorgehensweise ein Leaderband L zur Aufrechterhaltung des kontinuierlichen Betriebes des Filmprozessors FP eingesetzt.

Die Tatsache, dass der mit vorgegebener fester Geschwindigkeit laufende Prozessor nach dem Herr-Sklave (master-slave) Prizip die Geschwindigkeit der Zuliefermaschine steuert, und der Umstand, dass die Gerätekombination autonom auf längere Unterbrechungen der Materialzufuhr reagieren kann, erlaubt die Verwendung von kleinen platzsparenden Buffern zwischen den einzelnen Geräten. Die lokale Steuerung LC in den Verarbeitungsstationen 2 bzw. 3 löst alle zeitkritischen Operationen und Aufgaben selbsttätig und erlaubt damit auf der übergeordneten Steuerungs-Ebene in der zentralen Steuerung SC eine zeitunkritische Realisierung der Optimierung. Die zu einem Verarbeitungsmodul zusammengefasste Kombination von Verarbeitungsstationen stellt autonom bestimmte Grundfunktionen zur Verfügung, welche der zentralen Steuerung SC eine Optimierung hinsichtlich der Durchlaufzeit eines Kundenauftrags und der Auslastung der einzelnen Geräte erlauben.

Das Filmmaterial N wird ausgangs des Filmprozessors FP auf Rollen gewickelt. Die Filmrollen F werden vorzugsweise mit Hilfe automatischer Transportvorrichtungen 6 zu eingangseitig des fotografischen Kopiergerätes PR vorgesehenen Andockvorrichtungen für die Filmrollen F transportiert. Dort wird das Filmmaterial N vorzugsweise automatisch in das Kopiergerät PR eingefädelt. Ausgangs des Kopiergerätes PR sind analoge Andockvorrichtungen für Filmrollen F vorgesehen, auf welche das Filmmaterial N wieder aufgewickelt wird. Von der Ausgangsseite des Kopiergerätes PR werden die Filmrollen vorzugsweise mit automatischen Transportvorrichtungen 7 zur Schneide - und Verpackungsstation FS transportiert. Das belichtete und entwickelte Kopiermaterial M wird ausgangs des Kopiermaterialprozessors PP gleichfalls auf Rollen, die vorzugsweise in Kassetten angeordnet sind, aufgewickelt. Die Kopiermaterialkassetten P werden schliesslich vorzugsweise mit Hilfe automatischer Transportvorrichtungen 8 ebenfalls zu der letzten Verarbeitungsstation 4 mit der Schneide- und Verpackungsvorrichtung FS transportiert. Dort werden das Filmmaterial N und das Kopiermaterial M geschnitten und zuordnungsgerecht verpackt. Ausgangs der letzten Verarbeitungsstation 4 können schliesslich die fertig bearbeiteten Kundenaufträge O entnommen werden.

Der Einsatz von Filmrollen F und von Kopiermaterialrollen P erlaubt eine einfache Realisierung von Langzeitspeichern variablen Füllstandes. Im Zusammenspiel mit der zentralen Steuerung SC können diese Langzeitspeicher sehr effizient für die Optimierung der Durchlaufzeit der Kundenaufträge O und der Auslastung der Verarbeitungsvorrichtungen eingesetzt werden. Der Einsatz von automatischen, von der zentralen Steuerung überwachten und kontrollierten Transportvorrichtungen erlaubt eine noch bessere Realisierung der Optimierungen. Insbesondere überwacht und steuert die zentrale Steuerung SC den Füllgrad der ausgangs der jeweiligen Prozessoren FP bzw. PP angeordneten Film- bzw. Kopiermaterialrollen F bzw. P je nach Auslastungsgrad der Verarbeitungsmodule. Das heisst je nach Bedarf werden ausgangs der jeweiligen Prozessoren FP bzw. PP mehr oder weniger gefüllte Rollen F bzw. P erstellt. Kriterium für den Füllgrad der Rollen ist nicht mehr der Transportweg bzw. die Transportzeit, die das Bedienungspersonal zwischen den einzelnen Modulen benötigt, was bisher dazu geführt hat, dass die Rollen immer möglichst vollständig gefüllt wurden und damit die Verweilzeit eines Kundenauftrags in der Verarbeitungsanlage unnötig verlängert wurde. Nunmehr überwacht die zentrale Steuerung SC den Auslastungsgrad der einzelnen beteiligten Verarbeitungsmodule 3 bzw. 4 und steuert danach den Füllgrad der Rollen F bzw. P.

Die Transportwege bzw. die für den Transport der Filmrollen F bzw. der Kopiermaterialrollen P vorgesehenen Transportvorrichtungen 6 und 7 bzw. 8 zusammen mit den Anstellmöglichkeiten in den Zielstationen erfüllen die Funktion von Bufferspeichern, die in diesem Fall als Rollenspeicher ausgebildet sind. Dabei wird die Ausgangseite der jeweiligen beteiligten Stationen FP, PR und PP zur jeweiligen Transportvorrichtung 6, 7 bzw. 8 gezählt. So wird der Transportbereich vom Filmprozessor FP bis zum fotografischen Kopiergerät PR als erster Transportbuffer TB1, der Transportbereich vom fotografischen Kopiergerät PR bis zur Schneide- und Verpackungsstation FS als zweiter Transportbuffer TB2 und schliesslich der Transportbereich für die Kopiermaterialrollen P vom Kopiermaterialprozessor PR bis zur Schneide- und Verpackungsstation als dritter Transportbuffer TB3 bezeichnet. Die Anzahl von Filmrollen F bzw. von Kopiermaterialrollen P in den Transportbuffern TB1 und TB2 bzw. TB3 geben den Füllgrad dieser Rollenspeicher an. Auf diese Weise kann auf Geschwindigkeitsschwankungen der beteiligten Verarbeitungsstationen reagiert werden indem Rollen grösseren oder kleineren Füllgrades erstellt und mehr oder weniger Rollen in die jeweiligen Transportbuffer TB1, TB2 bzw. TB3 eingespeist werden.

Der Betrieb der erfindungsgemässen fotografischen Verarbeitungsanlage 1 basiert somit auf einem Bufferkonzept, welches sowohl als Schlaufenspeicher ausgebildete Kurzzeitbuffer FB bzw. PB als auch Transportbuffer TB1, TB2 und TB3 umfasst. Der Filmbuffer FB fängt die kurzen Unterbrechungen innerhalb des ersten Verabeitungsmoduls 2 auf, die auftreten können, wenn beispielsweise in der Öffnungs-und Spleissstation OS ein Spleiss nicht richtig ausgeführt wird oder beschädigte Filme C oder typenfremdes Filmmaterial N repariert oder ausgeschieden werden müssen. Der zweite Kuzzeitbuffer, der Kopiermaterialbuffer PB fängt kurze Unterbrechungen in der Produktion des Kopiergerätes PR im zweiten Verarbeitungsmodul 3 auf, die beispielsweise beim Filmrollenwechsel, beim Papierrollenwechsel oder ganz einfach auftragsbedingt dadurch auftreten können, dass von einzelnen Vorlagen mehrere Kopien erstellt werden müssen. Auch kurze Variationen der Verarbeitungsgeschwindigkeit des Kopiergerätes PR, die beim überspringen von unbrauchbaren Vorlagen oder bei Mehrfachkopien von Vorlagen entstehen, werden ausgeglichen.

Der erste Transportbuffer TB1 für die Filmrollen F kompensiert insbesondere physikalisch bedingte Unterschiede der Verarbeitungsgeschwindigkeiten des Filmprozessors FP und des Kopiermaterialprozessors PP. Er fängt aber auch längere Unterbrechungen des Betriebes des Kopiergerätes PR aufgrund technischer Fehler auf. Im zweiten Transportbuffer TB2 wird das Filmmaterial N gespeichert, bis es zusammen mit dem belichteten und entwickelten Kopiermaterial M in der Schneide- und Verpackungsstation FS verarbeitet werden kann. Dies ist insbesondere nötig, da das im Kopiergerät PR belichtete Kopiermaterial M ja zunächst im Kopiermaterialprozessor PP entwickelt werden muss, bevor es zum nächsten Verarbeitungsmodul 4 weitertransportiert werden kann. Es können aber auch kleinere Unterbrechungen des Betriebes der Schneideund Verpackungsstation FS ausgeglichen werden. Der dritte Transportbuffer TB3 betrifft das auf Rollen P gewickelte belichtete und entwickelte Kopiermaterial M. Er kann Unterbrechungen des Betriebes des letzten Verarbeitungsmoduls 4 auffangen, die auftreten können, wenn beispielsweise Filmrollen gewechselt werden oder wenn das Bedienungspersonal bei auftragsbedingten Material-Problemen in die Funktion der Schneide- und Verpackungsstation FS eingreifen muss.

Mit Hilfe der zentralen Steuerung SC wird die Vorratshaltung in den Bufferspeichern TB1, TB2 bzw. TB3 und der Füllstand der einzelnen Rollen F bzw. P überwacht und je nach Auslastungsgrad der einzelnen Stationen gesteuert und hinsichtlich der Durchlaufzeit optimiert. Im zweiten Verarbeitungsmodul 3 steuert die zentrale Steuereinheit SC beispielsweise den Aufwickelvorgang des Filmmaterials N einerseits und den Aufwickelvorgang des Kopiermaterials M ausgangs des Kopiermaterialprozessors PP andererseits derart, dass zu jeweils einer Filmmaterialrolle F eine Kopiermaterialrolle P mit zugeordneten Kopien erstellt wird, wobei die Filmrolle F und die Kopiermaterialrolle P vorzugsweise dieselbe Reihenfolge verschiedener Kopiervorlagen bzw. Kopien aufweisen. Besonders vorteilhaft auf die Durchlaufzeit eines Kundenauftrags wirkt sich dabei vor allem auch aus, dass die Reihenfolge der Negative auf der Filmrolle F derart ist, dass jeweils das zuerst in die Verarbeitungsanlage 1 eingegebene Negativ zuäusserst der Rolle angeordnet ist und dass die Reihenfolge erhalten bleibt. Entsprechendes gilt natürlich auch für die Kopiermaterialrollen P mit den belichteten und entwickelten Kopien.

Vorzugsweise steuert die zentrale Steuerung SC auch den Transport der Filmrollen F vom fotografischen Kopiergerät PR und den Transport der Kopiermaterialrollen P vom Ausgang des Kopiermaterialprozessors PP derart, dass zugeordnete Film- und Kopiermaterialrollen F bzw. P im wesentlichen gleichzeitig bei der Schneide- und Verpackungsstation FS ankommen.

Die zentrale Steuerung SC wird durch die zentrale Steuereinheit 5 realisiert, welche vorzugsweise eine elektronische Rechenanlage mit Eingabe- und Ausgabeeinheit umfasst, die über serielle Leitungen (in Fig. 2 durch die strichlierten Leitungen SC angedeutet) mit den einzelnen Verarbeitungsmodulen und -stationen verbunden ist. Die Signalleitungen erlauben einen Datenaustausch in beide Richtungen. Die übergeordnete zentrale Steuerung SC steuert die Grundeinstellung der einzelnen Verarbeitungsstationen, beispielsweise werden die Stationen automatisch auf das jeweilige verwendete Papierformat eingestellt. Sie kann Daten von den einzelnen Stationen empfangen, verarbeiten und an andere Stationen weiterleiten. Beispielsweise verarbeitet sie die in der eingangs der Verarbeitungsanlage 1 in der Öffnungs- und Spleissstation OS erfassten Auftragsdaten, gibt diese Daten an das fotografische Kopiergerät PR weiter, um zu gewährleisten, dass die gewünschte Anzahl von Kopien erstellt wird und leitet die Daten an die Schneide- und Verpackungstation FS weiter, wo dann aufgrund dieser Daten der Preis für den Kundenauftrag auf die Verpackung gedruckt wird.

Eine ganz wesentliche Funktion, die vorzugsweise von der zentralen Steuerung SC vorgenommen wird, ist die Registrierung der im fotografischen Kopiergerät PR bestimmten Lagekoordinaten der einzelnen Kopiervorlagen auf dem Filmmaterialstreifen N. Diese Daten werden von der zentralen Steuerung SC an die Schneide- und Verpackungsstation FS weitergeleitet, wo sodann der Filmmaterialstreifen N an der richtigen Stelle geschnitten wird. Auf diese Weise kann auf eine Notcheinrichtung im fotografischen Kopiergerät, welche Markierungen in den Filmmaterialstreifen N stanzt, verzichtet werden. Für den Fall, dass im fotografischen Kopiergerät PR auch die Nummer der einzelnen Kopiervorlagen auf dem Filmmaterialstreifen N erfasst wird, beispielsweise durch Lesen der auf den Filmmaterialstreifen N angeordneten erweiterten DX-Codes, werden auch diese Informationen von der zentralen Steuerung SC registriert. Die Daten werden von der zentralen Steuerung SC beispielsweise an die Schneide- und Verpackungsstation FS weitergeleitet, wo beispielsweise mit Hilfe einer Druckereinrichtung 12 die entsprechende Vorlagennummer auf die Vorder- oder auf die Rückseite der zugehörigen Kopie(n) aufgedruckt werden kann. Selbstverständlich kann die Druckereinrichtung auch beispielsweise ausgangs des Kopiermaterialprozessors PP angeordnet sein. In diesem Fall leitet die zentrale Steuerung SC die Daten an diesen weiter und erfolgt der Aufdruck der Nummer dort.

Besonders vorteilhaft ist es, wenn die zentrale Steuerung SC den Materialfluss in der Verarbeitungsanlage 1 anzeigt und kontrolliert. Zu diesem Zweck übermitteln die einzelnen Verarbeitungsmodule Informationen über einen gerade im jeweiligen Modul befindlichen Kundenauftrag, sodass mit Hilfe der zentralen Steuereinheit SC jederzeit ein bestimmter Kundenauftrag innerhalb der fotografischen Verarbeitungsanlage 1 lokalisiert werden kann. Dies ist insbesondere dann von grosser Bedeutung, wenn Probleme im Verarbeitungsablauf auftreten, und beispielsweise ganze Aufträge ausgeschieden werden müssen. So können beispielsweise aufgrund von schlechtem Filmmaterial im fotografischen Kopiergerätes PR keine Kopien erstellt werden. Es kann nunmehr sehr einfach festgestellt, auf welcher Filmmaterialrolle F sich der Filmstreifen befindet. In der Schneide- und Verpackungsstation FS wird dann der Filmstreifen erkannt und nicht geschnitten, sondern ungeschnitten samt der zugehörigen Auftragstasche aus dem laufenden Prozess ausgeschieden.

Um die Durchlaufzeit eines Kundenauftrags O durch die fotografische Verarbeitungsanlage 1 möglichst kurz zu halten, ist die Anordnung der Rollenbuffer, welche bedingt durch die Umspulvorgänge die Reihenfolge der Kopiervorlagen auf den Filmmaterialrollen drehen, derart gewählt, dass der zuerst in die eingespeiste Kundenauftrag O diese auch als erster in bearbeitetem Zustand verlässt.

Die wesentlichsten Funktionen der zentralen Steuerung SC bestehen aber vor allem in der Steuerung des Anfahrens und des Abschaltens der einzelnen Verarbeitungsmodule und der in den Modulen angeordneten Verarbeitungsstationen sowie in der Steuerung der Rollengrösse bzw. in der Ermittlung des optimalen Zeitpunktes für das Schneiden des Materials in der entsprechenden Station und in der Steuerung und Optimierung des Transportes der Rollen von einem Modul zum nächsten.

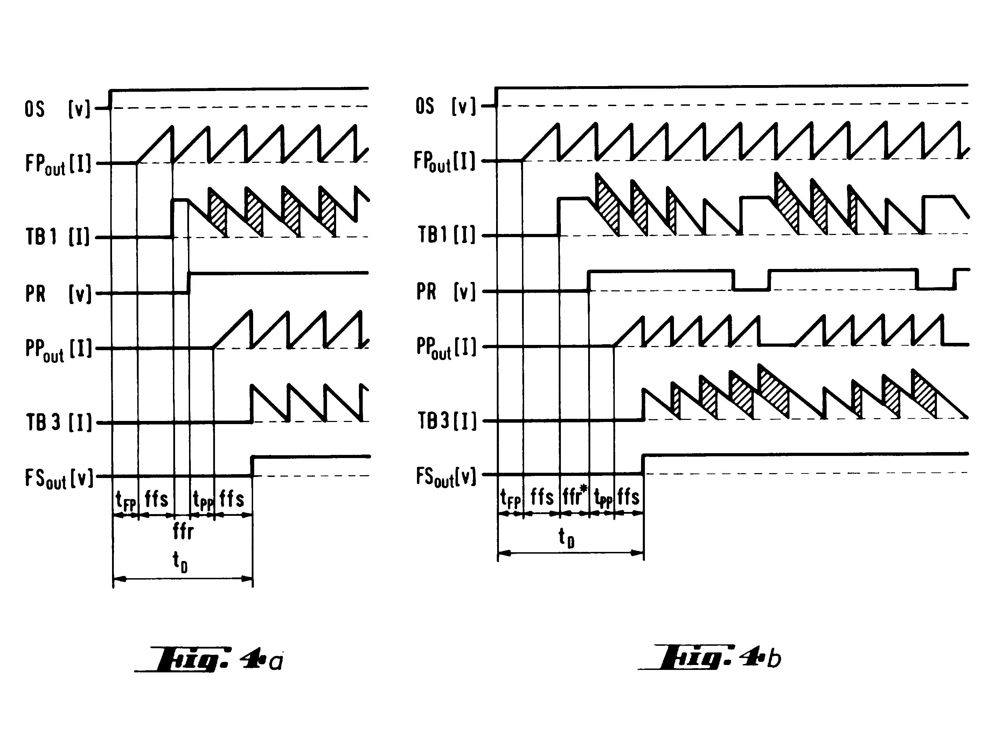

Im folgenden wird die Funktion der zentralen Steuerung SC in Bezug auf das Hochfahren der erfindungsgemässen Verarbeitungsanlage und auf die Optimierung des Buffermanagements an zwei Betriebsbeispielen unter Bezugnahme auf die Diagramme in Fig. 4a und 4b näher erläutert. Die in den Diagrammen angegebenen Bezeichnungen beziehen sich auf die bereits zuvor beschriebenen Verarbeitungsstationen, die tiefgestellte Bezeichnung "out" bei den Bezugszeichen für einzelne Verarbeitungsstationen steht für den Ausgang der jeweiligen Station. Die in eckigen Klammern angegebenen Einheiten stehen einerseits [v] für die Verarbeitungsgeschwindigkeit in den Verarbeitungsstationen und andererseits [I] für den Rolleninhalt bzw. den Füllgrad der Rollen. Die schraffierten Bereiche geben den Füllstand der jeweiligen Transportbuffer an. Beide Diagramme gehen von der Annahme aus, dass 500 Aufträge/Stunde am Eingang der fotografischen Verarbeitungsanlage 1 eingespeist werden.

In Fig. 4a ist der Normalbetrieb der erfindungsgemässen Verarbeitungsanlage 1 schematisch dargestellt. Die am Eingang der Öffnungs- und Spleissstation OS eingegebenen Filmpatronen C werden geöffnet und die Filmstreifen zu einem endlosen Band N zusammengespleisst und zum Filmprozessor FP weitertransportiert. Dadurch wird zunächst der eingangs des Filmprozessors FP integriert angeordnete Filmbuffer FB gefüllt. Erst wenn der Filmbuffer FB den gewünschten Füllstand erreicht hat, wird von der zentralen Steuerung SC der Filmprozessor FP gestartet, damit kurze Unterbrechungen an der Öffnungs- und Spleissstation OS nicht bereits zu Unterbrechungen im Betrieb des Filmprozessors FP führen können. Für das Durchlaufen des Filmbuffers FB und des Filmprozessors FP benötigt ein Auftrag die Durchlaufzeit t_{FP}.

Wenn die Filmrolle F am Ausgang des Filmprozessors FPₒᵤₜ den Schneide-Füllstand ffs erreicht, wird dort das Filmmaterial N geschnitten und zum fotografischen Kopiergerät PR transportiert. Das Schneiden erfolgt dabei vorzugsweise immer an den Stellen zwischen zwei verschiedenen Filmen, an denen in der Öffnungs- und Spleissvorrichtung ein Stück Leaderband L eingefügt worden ist. Der genaue Zeitpunkt für das Einfügen eines Leaderbandes L zwischen zwei Filmen wird durch die zentrale Steuerung SC gesteuert. Dazu summiert sie die von der Öffnungs- und Spleissvorrichtung übermittelten Daten über die Filmlängen und vergleicht sie mit dem Schneide-Füllstand ffs. Auf dieses Leaderband wird eine spezielle Markierung angebracht, die später von der Schneide- und Spleissstation des Filmprozessors FP erkannt wird, der sodann dort schneidet. Durch die Verwendung eines Leaderbandes L wird vermieden, dass das Filmmaterial N beim Einfädeln in eine nachfolgende Verarbeitungsstation, beispielsweise in das Kopiergerät PR, zerkratzt wird. Auf diese Weise bestimmt der Füllstand ffs in der Folge auch den Füllstand aller weiteren Filmrollen F.

Das fotografische Kopiergerät PR wird nun nicht sofort gestartet, wenn die Filmrolle F eingangsseitig angedockt wird, sondern die zentrale Steuerung SC gibt erst dann den Startbefehl, wenn die nächste Filmrolle F am Ausgang des Filmprozessors FP einen gewissen Reservefüllstand erreicht hat. Dazu wird die Zeitspanne ffr benötigt. Auf diese Weise ist in dem ersten Transportbuffer TB1 eine Rolle zwischengespeichert. Dies ist in Fig. 4a durch die schraffierten Bereiche angedeutet.

Nach dem Start des Kopiervorganges im Kopiergerät PR wird zunächst der Kopiermaterialbuffer PB eingangs des Kopiermaterialprozessors PP gefüllt. Analog zum Filmprozessor startet die zentrale Steuerung SC den Kopiermaterialprozessor erst, wenn der Buffer PB den Soll-Füllstand erreicht hat. Die Durchlaufzeit des Kopiermaterials M durch den Kopiermaterialbuffer PB und den Kopiermaterialprozessor PP ist durch die Zeitspanne tₚₚ gegeben. Das entwickelte Kopiermaterial M wird ausgangs des Kopiermaterialprozessors PPₒᵤₜ auf eine Rolle P gewickelt. Vorzugsweise wird das Kopiermaterial M dabei immer so geschnitten, dass zu einer Filmrolle F genau eine Papierrolle P entsteht. Dies wird einfach dadurch reaisiert, dass das Kopiergerät PR beim Kopieren bei jeder neuen Filmrolle eine unbelichtete Lücke auf dem Kopiermaterial M belässt, die anschliessend in der ausgangseitigen Schneide- und Spleissstation 10 des Kopiermaterialprozessors PP detektiert wird und sodann dort geschnitten wird. Die Zeit für die Erstellung einer Kopiermaterialrolle P ausgangs des Kopiermaterialprozessors PPₒᵤₜ entspricht daher etwa der Zeit für die Erstellung einer Filmrolle F und durch die Zeitspanne ffs gegeben. Das Filmmaterial N wird ausgangs des Kopiergerätes PR auf eine Filmrolle F gewickelt, deren Grösse der eingangseitigen entspricht.

Die zentrale Steuerung SC steuert nun den Transport zur Schneide- und Verpackungsstation FS derart, dass die Kopiermaterialrolle P über die Transportvorrichtung 8 und die zugehörige Filmrolle F über die Transportvorrichtung 7 gleichzeitig ankommen. Dies kann dazu führen, dass im zweiten Transportbuffer TB2 eine oder mehrere Filmrollen F zwischengespeichert werden, solange das entsprechende Kopiermaterial M den Kopiermaterialprozessor PP durchläuft.

Die Gesamtdurchlaufzeit t_{D} eines Kundenauftrags O durch die fotografische Verarbeitungsanlage 1 ist somit durch die Summe der Einzelzeitspannen gegeben. Damit ergibt sich die Gesamtdurchlaufzeit zu t_{D} = t_{FP} + ffs + ffr + tₚₚ + ffs.

Im Normalbetrieb laufen der Filmprozessor FP und der Kopiermaterialprozessor PP mit ihrer fest vorgegebenen Geschwindigkeit. Die Öffnungs- und Spleissstation OS läuft mit der durch den Filmprozessor FP gesteuerten Geschwindigkeit. Das Kopiergerät PR läuft mit der durch den Kopiermaterialprozessor PP gesteuerten Geschwindigkeit. Die Schneide- und Verpackungsstation FS kann dank des Bufferkonzeptes problemlos mit der eigenen Geschwindigkeit arbeiten. Falls sie zu schnell arbeitet, müssen Pausen eingelegt werden. Arbeitet sie zu langsam, werden der zweite Transportbuffer TB2 für die Filmrollen und der Transportbuffer TB3 für die Kopiermaterialrollen mit Rollen gefüllt.

Der vorangehend beschriebene Normalbetrieb kann nur theoretisch über längere Zeit aufrecht erhalten werden, nämlich nur solange als das Verhältnis von bearbeiteter Filmmateriallänge zu kopierter Kopiermateriallänge konstant ist. Während des Betriebes entstehen aber üblicherweise kleinere Abweichungen durch nicht vorhersehbare Umstände, wie beispielsweise sogenannte "skips", wie das Überspringen von unbrauchbaren Kopiervorlagen auf dem Filmmaterial N bezeichnet werden. Grössere Abweichungen vom konstanten Längenverhältnis ergeben sich beispielsweise durch die Verwendung verschiedener Kopiermaterialformate. Ungeachtet dessen müssen aber der Filmprozessor FP und der Kopiermaterialprozessor PP aus physikalischen Gründen mit konstanter Geschwindigkeit betrieben werden müssen. Die übergeordnete zentrale Steuerung SC löst dieses Problem dadurch, dass es bei Bedarf "Lücken" in den endlosen Materialbändern (Filmmaterial N bzw. Kopiermaterial M) erzeugt, indem es ein Leaderband einfügt und damit die mittlere Durchlaufgeschwindigkeit des Filmmaterials im Filmprozessor FP bzw. des Kopiermaterials im Kopiermaterialprozessor PP reduziert. Die Transportbuffer TB1 für die Filmrollen F und TB3 für die Kopiermaterialrollen P werden dazu benützt, um den lückenden Betrieb zu filtern, sodass die an die Stationen, in denen Lücken gesetzt werden, anschliessenden Verarbeitungsstationen im gewohnten Rahmen weiterbetrieben werden können.

In Fig. 4b ist in Form eines Diagrammes ein derartiger unausgeglichener Betrieb für den Fall dargestellt, dass beispielsweise mit einem gegenüber dem Normalbetrieb um 20% kürzeren Kopiermaterialformat gearbeitet wird. Dies bedingt, dass der Kopiermaterialprozessor PP mit einer im Mittel um 20% geringeren Geschwindigkeit betrieben werden muss. Dies wird dadurch erreicht, dass alle 50 min eine Lücke von 10 min geschaffen wird, das heisst im Kopiermaterialprozessor PP Leaderband der entsprechenden Länge eingefügt wird. Ein gegenüber dem Normalbetrieb vergrösserter Reserve-Füllstand an Filmmaterial im Filmprozessor FP ist nach einer gegenüber der im Normalbetrieb erforderlichen längeren Zeitspanne ffr * erreicht. Auf diese Weise wird erreicht, dass im ersten Transportbuffer TB1 ein ausreichend grosser Reservevorrat an Filmmaterial N bereitsteht. Das Einfügen von Lücken im Kopiermaterialprozessor PP bedingt, dass auch das Kopiergerät PR im Intervallbetrieb aber mit gegenüber dem Normalbetrieb höherer Geschwindigkeit betrieben wird. Bedingt durch das kürzere Kopiermaterialformat werden die Papierrollen P am Ausgang des Kopiermaterialprozessors PPₒᵤₜ kleiner bzw. weisen einen geringeren Füllgrad auf.

Der Füllstand und die Verweildauer der Rollen in den Transportbuffern wird durch die Zeitspannen ffs und ffr bestimmt. ffs wird durch die gewünschte Rollengrösse festgelegt. ffr bestimmt dem Anfangsfüllstand des Transportbuffers TB1 und damit das Intervall für das Einfügen einer Lücke. ffr wird von der zentralen Steuerung SC aufgrund der Formateinstellung bzw. der Länge der Kopien und von den aktuellen Auftragsdaten, die in der Öffnungs- und Spleissstation OS gelesen werden und an die zentrale Steuereinheit 5 weitergeleitet werden, bestimmt. Dabei werden auch die üblicherweise zu erwartenden skips in die Bestimmung miteinbezognen. Wenn ein langes Kopiermaterialformat verwendet wird oder wenn Mehrfachkopien gemacht werden sollen, wird ein kleinerer Wert für ffr gewählt. In diesen Fällen wird sich der Bufferinhalt des Transportbuffers TB1 automatisch erhöhen. Um den Inhalt des ersten Transportbuffers TB1 wieder abzubauen, wird von der zentralen Steuerung der Durchlauf des Filmmaterials N im Filmprozessor FP mit einer Lücke versehen, das heisst für eine gewisse Zeit ein Leaderband dazwischengeschaltet. Bei kurzen Kopiermaterialformaten wird ffr um die Durchlaufzeittₚₚ des Kopiermaterials M im Kopiermaterialprozessor PP vergrössert. Dies hat zur Folge, dass die zwangsläufig im Kopiermaterialprozessor PP eingeschobene Lücke mindestens die Grösse der Durchlaufzeit im Prozessor PP aufweist. Auf diese Weise kann ein vollständiges Leaderband L eingezogen werden, welches auch vollständig durch den Prozessor PP durchtransportiert wird. Das Leaderband L wird nicht zerstückelt und kann dadurch mehrfach verwendet werden.

Die erfindungsgemässe fotografische Verarbeitungsanlage und das erfindungsgemässe Verfahren zum Betrieb der fotografischen Verarbeitungsanlage erlauben es, die Durchlaufzeit eines Kundenauftrages durch die Anlage zu optimieren. Die hierarchisch zweistufige Steuerung erlaubt eine Steuerung aller zeitkritischen Abläufe mit Hilfe einer lokalen Steuerung. Diese überwacht und steuert alle die Funktionen, welche die Verarbeitungsstationen bereits eingebaut haben. Die übergeordnete zentrale Steuerung gibt die Rahmenbedingungen vor und kann die Optimierung des Rollenwechsels und des Einfügens von Lücken zeitunkritisch durchführen. Auf diese Weise wird die Gesamt-Verarbeitungsgeschwindigkeit der Kundenaufträge erhöht, indem Wartezeiten zwischen den einzelnen Stationen verkürzt oder gänzlich eliminiert werden. Die enge Kopplung der einzelnen Stationen zu Modulen in Verbindung mit den automatischen Transportmitteln erlaubt überdies auch eine möglichst platzsparende Anordnung der Gesamtanlage.

## Patentansprüche

1. Verfahren zum Betrieb einer fotografischen Verarbeitungsanlage (1), welche verschiedene Verarbeitungsmodule (2,3,4) für belichtetes fotografisches Filmmaterial (N) und/oder fotografisches Kopiermaterial (M) umfasst, die nacheinander vom Filmmaterial (N) bzw. vom Kopiermaterial (M) durchlaufen werden, und bei welcher Verarbeitungsanlage (1) wenigstens ein Verarbeitungsmodul (2;3) eine vorgeschaltete erste Verarbeitungsstation (OS;PR) und eine dieser über einen Pufferspeicher (FB;PB) für das Filmmaterial (N) bzw. das Kopiermaterial (M) nachgeschaltete zweite Verarbeitungsstation (FP;PP), welche vom Filmmaterial (N) bzw. Kopiermaterial (M) mit im wesentlichen konstanter Verarbeitungsgeschwindigkeit durchlaufen werden muss, umfasst, so dass das Filmmaterial (N) bzw. das Kopiermaterial (M) dieses Verarbeitungsmodul (2;3) on-line durchläuft, und wobei lokale Steuerungen (LC) und eine zentrale Steuereinheit (5) vorgesehen sind, dadurch gekennzeichnet, dass das Filmmaterial (N) bzw. das Kopiermaterial (M) in Rollenform off-line vom einen zum anderen Verarbeitungsmodul (2,3,4) gelangt, dass der Transport des Filmmaterials (N) bzw. des Kopiermaterials (M) in und zwischen den Verarbeitungsmodulen (2,3,4) der Verarbeitungsanlage (1) hierarchisch zweistufig gesteuert wird, wobei auf der unteren Hierarchiestufe mittels einer im genannten wenigstens einen Verarbeitungsmodul (2;3) angeordneten lokalen Steuerung (LC) die Verarbeitungsgeschwindigkeit der vorgeschalteten ersten Verarbeitungsstation (OS;PR) nach Massgabe der nachgeschalteten zweiten Verarbeitungsstation (FP;PP) lokal gesteuert wird, und wobei auf der oberen Hierarchiestufe mittels einer der lokalen Steuerung (LC) übergeordneten zentralen Steuereinheit (5) zentrale Steuerungsfunktionen (SC) ausgeführt werden, die Funktion der einzelnen Verarbeitungsmodule (2,3,4) überwacht wird, und die Übergabe des Filmmaterials (N) bzw. Kopiermaterials (M) zwischen den Verarbeitungsmodulen (2,3,4) im Hinblick auf eine Optimierung des Durchsatzes des Filmmaterials (N) bzw. des Kopiermaterials (M) durch die gesamte Verarbeitungsanlage (1) gesteuert wird.

2. Verfahren nach Anspruch 1, dadurch gekennzeichnet, dass die lokale Steuerung (LC) nach dem "Herr-Sklave"- (master-slave) Prinzip erfolgt und nach dem Starten des Betriebes eines Verarbeitungsmoduls (2,3) autonom und vollautomatisch in demselben abläuft.

3. Verfahren nach Anspruch 1 oder 2, dadurch gekennzeichnet, dass bei einer fotografischen Verarbeitungsanlage (1) mit einem Verarbeitungsmodul, welches wenigstens ein fotografisches Kopiergerät (PR) sowie einen Kopiermaterialprozessor (PP) mit vorgeschaltetem Kopiermaterialpuffer (PB) für die Entwicklung des belichteten Kopiermaterials (M) umfasst, welche über Signalleitungen miteinander verbunden sind, die Verarbeitungsgeschwindigkeit des Kopiermaterials (M) im fotografischen Kopiergerät (PR) nach Massgabe der vorgegebenen konstanten Durchlaufgeschwindigkeit des Kopiermaterialprozessors (PP) und des Füllstandes des Kopiermaterialpuffers (PB) lokal gesteuert wird.

4. Verfahren nach einem der Ansprüche 1 - 3, dadurch gekennzeichnet, dass bei einer fotografischen Verarbeitungsanlage (1) mit einem Verarbeitungsmodul, welches wenigstens eine Filmöffnungs- und Spleissstation (OS) sowie einen zugeordneten Filmprozessor (FP) mit vorgeschaltetem Filmpuffer (FB) für die Entwicklung des belichteten Filmmaterials (N) umfasst, welche über Signalleitungen miteinander verbunden sind, die Verarbeitungsgeschwindigkeit des Filmmaterials (N) in der Filmöffnungs- und Spleissstation (OS) nach Massgabe der vorgegebenen konstanten Durchlaufgeschwindigkeit des Filmprozessors (FP) und des Füllstandes des Filmpuffers (FB) lokal gesteuert wird.

5. Verfahren nach Anspruch 3 oder 4, dadurch gekennzeichnet, dass die Verarbeitungsgeschwindigkeit des Filmmaterials (N) in der Filmöffnungs- und Spleissstation (OS) bzw. des Kopiermaterials (M) im fotografischen Kopiergerät (PR) lokal derart gesteuert wird, dass der der folgenden Verarbeitungsstation (FP; PP) jeweils zugeordnete Puffer (FB; PB) zu etwa 80 % bis etwa 99 % gefüllt ist.

6. Verfahren nach Anspruch 4 oder 5, dadurch gekennzeichnet, dass bei längerfristiger Unterbrechung der Film- bzw. Kopiermaterialzufuhr bei Unterschreiten des Füllstandes des entsprechenden Puffers (FB; PB), vorzugsweise bei etwa 5 % bis etwa 25 % des maximalen Füllstandes, in einer Spleissvorrichtung (9) eingangs des jeweiligen Puffers (FB; PB) ein Leaderband (L) an das Film- bzw. Kopiermaterialende angespleisst wird, welches ausgangs des Film- bzw. Kopiermaterialprozessors (FP; PP) wieder abgetrennt und zum Eingang des jeweiligen Puffers (FB; PB) zurücktransportiert wird.

7. Verfahren nach Anspruch 6, dadurch gekennzeichnet, dass bei Wiederaufnahme der Film- bzw. Kopiermaterialzufuhr an den jeweiligen Puffer (FB; PB) das Film- bzw. Kopiermaterial (N; M) bis zur Spleissvorrichtung (9) transportiert wird, dort das Leaderband (L) abgeschnitten wird, und das Vorderende des Film- bzw. Kopiermaterials an das Hinterende des Leaderbandes angespleisst wird, und dass ausgangs des Film- bzw. des Kopiermaterialprozessors (FP; PP) das Vorderende des Film- bzw. Kopiermaterialbandes vom Leaderband getrennt wird.

8. Verfahren nach Anspruch 7, dadurch gekennzeichnet, dass das Vorderende des Film-bzw. Kopiermaterialbandes ausgangs des Film- bzw. des Kopiermaterialprozessors (FP; PP) an das Hinterende eines dort wartenden Film- bzw. Kopiermaterialbandes angespleisst wird.

9. Verfahren nach einem der Ansprüche 4 - 8, dadurch gekennzeichnet, dass das Film-bzw. Kopiermaterial (N; M) ausgangs des jeweiligen Prozessors (FP; PP) auf Rollen (F; P) aufgewickelt wird.

10. Verfahren nach Anspruch 9, dadurch gekennzeichnet, dass die zentrale Steuerung (SC) den Füllgrad der ausgangs der jeweiligen Prozessoren (FP; PP) angeordneten Film- bzw. Kopiermaterialrollen (F; P) überwacht und je nach Auslastungsgrad der Verarbeitungsmodule (2,3,4) steuert.

11. Verfahren nach Anspruch 10, dadurch gekennzeichnet, dass die Filmrollen (F) vollautomatisch vom Filmprozessor (FP) zum fotografischen Kopiergerät (PR) im nächsten Verarbeitungsmodul (3) transportiert werden, wobei die zentrale Steuerung (SC) je nach Bedarf und Auslastungsgrad der Verarbeitungsmodule den Transport steuert, und dass die Transportvorrichtung (6) zwischen dem ersten und dem zweiten Verarbeitungsmodul als Transportpuffer (TB1) für die Filmrollen (F) verwendet werden.

12. Verfahren nach Anspruch 11, dadurch gekennzeichnet, dass das Filmmaterial (N) ausgangs des fotografischen Kopiergerätes (PR) auf Rollen (F) aufgewickelt wird, und dass die zentrale Steuerung (SC) den Aufwickelvorgang des Filmmaterials (N) einerseits und den Aufwickelvorgang des Kopiermaterials (M) ausgangs des Kopiermaterialprozessors (PP) andererseits derart steuert, dass zu jeweils einer Filmmaterialrolle (F) eine zugeordnete Kopiermaterialrolle (P) mit den entwickelten Kopien erstellt wird, wobei die Reihenfolge der Kopiervorlagen auf der Filmmaterialrolle (F) mit der Reihenfolge der Kopien auf der Kopiermaterialrolle (P) übereinstimmt, und wobei vorzugsweise die Reihenfolge der Kopiervorlagen bzw. der Kopien erhalten bleibt, so dass die früher bearbeitete Kopiervorlagen bzw. Kopien jeweils aussen auf den Rollen (F, P) zu finden sind.

13. Verfahren nach Anspruch 12, dadurch gekennzeichnet, dass die zentrale Steuerung (SC) den Transport der Filmrollen vom fotografischen Kopiergerät und den Transport der Kopiermaterialrollen vom Ausgang des Kopiermaterialprozessors zu einem nachfolgenden vorzugsweise vollautomatischen Schneide- und Verpackungsmodul derart steuert, dass zugeordnete Film- und Kopiermaterialrollen im wesentlichen gleichzeitig bei der Station ankommen, und das die Transportvorrichtungen (7 bzw. 8) für die Filmrollen (F) bzw. für die Kopiermaterialrollen (P) als Transportpuffer (TB2 bzw. TB3) eingesetzt werden.

14. Verfahren nach Anspruch 13, dadurch gekennzeichnet, dass die zentrale Steuerung (SC) den Transport von Auftragstaschen (B) für die Filmrollen (C), denen in der Filmöffnungs- und Spleissstation (OS) die erforderlichen Auftragsdaten entnommen werden, von der Filmöffnungs- und Spleissstation (OS) über vorzugsweise vollautomatische Transportmittel (11) zum Schneide- und Verpackungsmodul derart steuert, dass die Reihenfolge der Auftragstaschen (B) der Reihenfolge der Kopiermaterialstreifen auf den Kopiermaterialrollen (F) entspricht, die zum Schneide- und Verpackungsmodul transportiert werden.

15. Verfahren nach einem der vorangehenden Ansprüche, dadurch gekennzeichnet, dass einzelnen Verarbeitungsmodule (2,3,4) über die Signalleitungen an die zentrale Steuereinheit (5) Informationen über einen gerade in der jeweiligen Station befindlichen Kundenauftrag übermitteln, so dass mit Hilfe der zentralen Steuerung (SC) jederzeit ein bestimmter Kundenauftrag innerhalb der fotografischen Verarbeitungsanlage (1) lokalisiert werden kann.

16. Verfahren nach Anspruch 15, dadurch gekennzeichnet, dass ein zuerst in die fotografische Verarbeitungsanlage (1) eingespeister Kundenauftrag diese auch als erster in bearbeitetem Zustand verlässt.

17. Verfahren nach einem der Ansprüche 13 - 16, dadurch gekennzeichnet, dass die zentrale Steuerung (SC) die im fotografischen Kopiergerät (PR) ermittelten Lagekoordinaten der einzelnen Kopiervorlagen auf dem Filmmaterialstreifen (N) registriert und an die Schneide- und Verpackungsstation (FS) weitergeleitet, wo sodann der Filmmaterialstreifen (N) an der richtigen Stelle geschnitten wird.

18. Verfahren nach einem der Ansprüche 13 - 17, dadurch gekennzeichnet, dass die zentrale Steuerung (SC) die im fotografischen Kopiergerät (PR) beispielsweise durch Lesen von auf den Filmmaterialstreifen (N) angeordneten erweiterten DX-Codes erfassten Nummem der einzelnen Kopiervorlagen auf dem Filmmaterialstreifen (N) registriert und diese Daten beispielsweise an die Schneide- und Verpackungsstation (FS) weiterleitet, wo beispielsweise mit Hilfe einer Druckereinrichtung (12) die entsprechende Vorlagennummer auf die Vorder- oder auf die Rückseite der zugehörigen Kopie(n) aufgedruckt wird.

19. Fotografische Verarbeitungsanlage, welche verschiedene Verarbeitungsmodule (2,3,4) für belichtetes fotografisches Filmmaterial (N) und/oder fotografisches Kopiermaterial (M) umfasst, die nacheinander vom Filmmaterial (N) bzw. vom Kopiermaterial (M) durchlaufen werden und bei welcher Verarbeitungsanlage (1) wenigstens ein Verarbeitungsmodul (2;3) eine vorgeschaltete erste Verarbeitungsstation (OS;PR) und eine dieser über einen Pufferspeicher (FB,PB) für das Filmmaterial (N) bzw. das Kopiermaterial (M) nachgeschaltete zweite Verarbeitungsstation (FP;PP), welche vom Filmmaterial (N) bzw. Kopiermaterial (M) mit im wesentlichen konstanter Verarbeitungsgeschwindigkeit durchlaufen werden muss, umfasst, so dass das Filmmaterial (N) bzw. das Kopiermaterial (M) dieses Verarbeitungsmodul (2;3) on-line durchläuft, und wobei lokale Steuerungen (LC) und eine zentrale Steuereinheit (5) vorgesehen sind, dadurch gekennzeichnet, dass das Filmmaterial (N) bzw. das Kopiermaterial (M) in Rollenform off-line vom einen zum anderen Verarbeitungsmodul (2,3,4) gelangt, dass für den Transport des Filmmaterials (N) bzw. des Kopiermaterials (M) in und zwischen den Verarbeitungsmodulen (2,3,4) der Verarbeitungsanlage (1) eine hierarchisch zweistufige Steuerung vorgesehen ist, wobei auf der unteren Hierarchiestufe eine im genannten wenigstens einen Verarbeitungsmodul (2;3) angeordnete lokale Steuerung (LC) die Verarbeitungsgeschwindigkeit der vorgeschalteten ersten Verarbeitungsstation (OS;PR) nach Massgabe der nachgeschalteten zweiten Verarbeitungsstation (FP;PP) lokal steuert, und wobei auf der oberen Hierarchiestufe eine der lokalen Steuerung (LC) übergeordnete zentrale Steuereinheit (5) zentrale Steuerungsfunktionen (SC) ausführt, die Funktion der einzelnen Verarbeitungsmodule (2,3,4) überwacht, und die Übergabe des Filmmaterials (N) bzw. Kopiermaterials (M) zwischen den Verarbeitungsmodulen (2,3,4) im Hinblick auf eine Optimierung des Durchsatzes des Filmmaterials (N) bzw. des Kopiermaterials (M) durch die gesamte Verarbeitungsanlage (1) steuert.

20. Anlage nach Anspruch 19, dadurch gekennzeichnet, dass sie ein Verarbeitungsmodul (3) mit einem fotografischen Kopiergerät (PR) sowie mit einem Kopiermaterialprozessor (PP) mit vorgeschaltetem Kopiermaterialpuffer (PB) für die Entwicklung des belichteten Kopiermaterials (M) umfasst, welche über Signalleitungen miteinander verbunden sind, und dass die Verarbeitungsgeschwindigkeit des Kopiermaterials (M) im fotografischen Kopiergerät (PR) nach Massgabe der vorgegebenen konstanten Durchlaufgeschwindigkeit des Kopiermaterialprozessors (PP) und des Füllstandes des Kopiermaterialpuffers (PB) lokal steuerbar ist.

21. Anlage nach Anspruch 19 oder 20, dadurch gekennzeichnet, dass sie ein Verarbeitungsmodul (2) mit einer Filmöffnungs- und Spleissstation (OS) sowie mit einem zugeordneten Filmprozessor (FP) mit vorgeschaltetem Filmpuffer (FB) für die Entwicklung des belichteten Filmmaterials (N) umfasst, welche über Signalleitungen miteinander verbunden sind, und dass die Verarbeitungsgeschwindigkeit des Filmmaterials (N) in der Filmöffnungs- und Spleissstation (OS) nach Massgabe der vorgegebenen konstanten Durchlaufgeschwindigkeit des Filmprozessors (FP) und des Füllstandes des Filmpuffers (FB) lokal steuerbar ist.

22. Anlage nach Anspruch 20 oder 21, dadurch gekennzeichnet, dass eingangs des jeweiligen Puffers (FB; PB) und ausgangs des zugehörigen Prozessors (FP; PP) jeweils eine Schneide- und Spleissvorrichtung (9,10) sowie eine ober- oder unterhalb der Schneide- und Spleissvorrichtung vorgesehene Andockeinrichtung für ein vorzugsweise auf eine Rolle gewickeltes Leaderband (L) angeordnet ist.

23. Anlage nach Anspruch 22, dadurch gekennzeichnet, dass ausgangs des Film- bzw. Kopiermaterialprozessors (FP; PP) eine Andockeinrichtung für Rollen (F; P) und eine Wickelvorrichtung zum Aufwickeln des Film- bzw. Kopiermaterials (N; M) auf die Rollen (F; P) angeordnet ist.

24. Anlage nach Anspruch 23, dadurch gekennzeichnet, dass eingangs und ausgangs des fotografischen Kopiergerätes (PR) Andockvorrichtungen für auf Rollen (F) gewickeltes bzw. zu wickelndes Filmmaterial (N) angeordnet sind, und dass eingangs des Kopiergerätes (PR) eine Anstelleinrichtung für wenigstens eine, auf eine Rolle (P) gewickeltes, unbelichtetes fotografisches Kopiermaterial enthaltende Kassette vorgesehen ist.

25. Anlage nach Anspruch 24, dadurch gekennzeichnet, dass im Anschluss an den Kopiermaterialprozessor (PP) eine vorzugsweise vollautomatische Schneide- und Verpackungsstation (FS) angeordnet ist, und dass die einzelnen Verarbeitungstationen (2,3,4) durch vorzugsweise vollautomatische Transportvorrichtungen (6,7,8) für die Filmmaterialrollen (F) bzw. die Kopiermaterialrollen (P) miteinander verbunden sind.

26. Anlage nach Anspruch 25, dadurch gekennzeichnet, dass zwischen der Filmöffnungs-und Spleissstation (OS) und der Schneide- und Verpackungsstation (FS) vorzugsweise vollautomatisch betreibbare Transportmittel (11) für Auftragstaschen (B) angeordnet sind.

27. Anlage nach Anspruch 25 oder 26, dadurch gekennzeichnet, dass die Schneide- und Verpackungsstation mit einer Druckeinrichtung (12) für das Aufdrucken von Vorlagennummern vorzugsweise auf die Rückseite der Kopien ausgestattet ist.

## Claims

1. Method of operating a photographic processing installation (1) which includes various processing modules (2, 3, 4) for exposed photographic film material (N) and/or photographic copying material (M), through which modules the film material (N) or the copying material (M) respectively pass successively, and in which processing installation (1) at least one processing module (2; 3) includes an upstream first processing station (OS; PR) and a second processing station (FP; PP) connected downstream of the first processing station (OS; PR) by means of a buffer store (FB; PB) for the film material (N) or the copying material (M), through which second processing station (FP; PP) the film material (N) or the copying material (M) has to pass at substantially constant speed, so that the film material (N) or the copying material (M) passes through this processing module (2; 3) on-line, and whereby local control units (LC) and a central control unit (5) are provided, characterised in that the film material (N) or the copying material (M) passes in reel form off-line from one processing module (2, 3, 4) to the other processing module (2, 3, 4) and in that the transport of the film material (N) or of the copying material (M) in and between the processing modules (2, 3, 4) of the processing installation (1) is hierarchically controlled at two levels whereby at the lower hierarchical level, by means of a local control unit (LC) arranged in the at least one processing module (2; 3) mentioned, the processing speed of the upstream first processing station (OS; PR) is locally controlled to meet the requirements of the downstream second processing station (FP; PP), and whereby at the upper hierarchical level, by means of a central control unit (5) which overrides the local control unit (LC), central control functions (SC) are carried out, the function of the individual processing modules (2, 3, 4) is monitored and the transfer of the film material (N) or of the copying material (M) between the processing modules (2, 3, 4) is controlled with a view to optimising the throughput of the film material (N) or of the copying material (M) through the complete processing installation (1).

2. Method according to Claim 1, characterized in that the local control unit (LC) takes place in accordance with the master/slave principle and, after operation of a processing module (2, 3) has commenced, takes place autonomously and fully automatically in the processing module (2, 3).

3. Method according to Claim 1 or 2, characterized in that in the case of a photographic processing installation (1) with a processing module which includes at least one photographic copying unit (PR) and one copying material processor (PP) with an upstream copying material buffer (PB) for the development of the exposed copying material (M), which items are connected together by means of signal lines, the processing speed of the copying material (M) in the photographic copying unit (PR) is controlled to meet the requirements of the specified constant throughput speed of the copying material processor (PP) and the charging level of the copying material buffer (PB).

4. Method according to one of Claims 1-3, characterized in that in the case of a photographic processing installation (1) with a processing module which includes at least one film opening and splicing station (OS) and one associated film processor (FP) with upstream film buffer (FB) for the development of the exposed film material (N), which items are connected together by means of signal lines, the processing speed of the film material (N) in the film opening and splicing station (OS) is locally controlled to meet the requirements of the specified constant throughput speed of the film processor (FP) and the charging level of the film buffer (FB).

5. Method according to Claim 3 or 4, characterized in that the processing speed of the film material (N) in the film opening and splicing station (OS) and of the copying material (M) in the photographic copying unit (PR) is locally controlled in such a way that the buffer (FB; PB) respectively associated with the following processing station (FP; PP) is charged to between approximately 80% and approximately 99%.

6. Method according to Claim 4 or 5, characterized in that in the case of long-term interruptions of the supply of film or copying material, a leader strip (L) is spliced onto the end of the film or copying material in a splicing appliance (9) at the inlet to the respective buffer (FB; PB) when the charging level of the corresponding buffer (FB; PB) falls, preferably, by between approximately 5% and approximately 25% of the maximum charging level, which leader strip is separated again at the outlet from the film or copying material processor (FP; PP) and is transported back to the inlet of the respective buffer (FB; PB).

7. Method according to Claim 6, characterized in that when the film or copying material supply is restored at the respective buffer (FB; PB), the film or copying material (M; N) is transported as far as the splicing appliance (9), the leader strip (L) is cut off at this location and the front end of the film or copying material is spliced onto the rear end of the leader strip and in that the front end of the film or copying material strip is separated from the leader strip at the outlet from the film or copying material processor (FP; PP).

8. Method according to Claim 7, characterized in that the front end of the film or copying material strip is spliced at the outlet from the film or copying material processor (FP; PP) to the rear end of the film or copying material strip waiting there.

9. Method according to one of Claims 4-8, characterized in that the film or copying material (N; M) is wound onto reels (F; P) at the outlet from the respective processor (FP; PP).

10. Method according to Claim 9, characterized in that the central control unit (SC) monitors the charging level of the film or copying material reels (F; P) arranged at the outlet from the respective processor (FP; PP) and controls in accordance with the degree of loading of the processing module (2, 3, 4).

11. Method according to Claim 10, characterized in that the film reels (F) are transported fully-automatically from the film processor (FP) to the photographic copying unit (PR) in the next processing module (3), whereby the central control unit (SC) controls the transport in accordance with the requirements and degree of loading of the processing module, and in that the transport appliance (6) between the first and the second processing module is used as a transport buffer (TV1) for the film reels (F).

12. Method according to Claim 11, characterized in that the film material (N) is wound onto reels (F) at outlet from the photographic copying unit (PR) and in that the central control unit (SC) controls the winding-on procedure of the film material (N), on the one hand, and the winding-on procedure of the copying material (M) at outlet from the copying material processor (PP), on the other hand, in such a way that for each film material reel (F), an associated copying material reel (P) with the developed copies is produced, whereby the sequence of the copying originals of the film material reel (F) agrees with the sequence of the copies on the copying material reel (P) and whereby the sequence of the copying originals and the copies are preferably maintained so that the respective copying originals and copies processed earlier are to be found on the outside of the reels (F, P).

13. Method according to Claim 12, characterized in that the central control unit (SC) controls the transport of the film reels from the photographic copying unit and the transport of the copying material reels from the outlet of the copying material processor to a subsequent preferably fully-automatic cutting and packing module in such a way that associated film and copying material reels arrive substantially simultaneously at the station and that the transport appliances (7 and 8 respectively) for the film reels (F) and for the copying material reels (P) are employed as transport buffers (TB2 and TB3).

14. Method according to Claim 13, characterized in that the central control unit (SC) controls the transport of the order bags (B) for the film cartridges (C), the necessary order data being retrieved from which bags in the film opening and splicing station (OS), by means of preferably fully-automatic transport means (11) to the cutting and packing module in such a way that the sequence of the order bags (B) corresponds to the sequence of the copying material strips on the copying material reels (F) which are transported to the cutting and packing module.

15. Method according to one of the preceding claims, characterized in that individual processing modules (2, 3, 4) transmit information on the customer order currently located in the respective station via the signal lines to the central control unit (5) so that, with the aid of the central control unit (SC), a particular customer's order can be located at any time within the photographic processing installation (1).

16. Method according to Claim 15, characterized in that a customer's order which is fed first into the photographic processing installation (1) also leaves first in the processed condition.

17. Method according to one of Claims 13-16, characterized in that the central control unit (SC) registers the position co-ordinates of the individual copying originals on the film material strips (N), as determined in the photographic copying unit (PR), and relays them to the cutting and packing station (FS) where the film material strips (N) are then cut at the correct location.

18. Method according to one of Claims 13-17, characterized in that the central control unit (SC) registers the numbers of the individual copying originals on the film material strips (N), which numbers are recorded in the photographic copying unit (PR) by, for example, reading extended DX codes arranged on the film material strips (N), and relays these data to, for example, the cutting and packing station (FS) where, with the aid of a printing device (12) for example, the corresponding original number is printed on the front or rear of the associated copy or copies.

19. Photographic processing installation, which includes various processing modules (2, 3, 4) for exposed photographic film material (N) and/or photographic copying material (M), through which modules the film material (N) or the copying material (M) respectively pass successively, and in which processing installation (1) at least one processing module (2; 3) includes an upstream first processing station (OS; PR) and a second processing station (FP; PP) connected downstream of the first processing station (OS; PR) by means of a buffer store (FB; PB) for the film material (N) or the copying material (M), through which second processing station (FP; PP) the film material (N) or the copying material (M) has to pass at substantially constant speed, so that the film material (N) or the copying material (M) passes through this processing module (2; 3) on-line, and whereby local control units (LC) and a central control unit (5) are provided, characterised in that the film material (N) or the copying material (M) passes in reel form off-line from one processing module (2, 3, 4) to the other processing module (2, 3, 4) and in that, for the transport of the film material (N) or of the copying material (M) in and between the processing modules (2, 3, 4) of the processing installation (1), a two-level hierarchical control is provided whereby at the lower hierarchical level, a local control unit (LC), arranged in the at least one processing module (2; 3) mentioned, locally controls the processing speed of the upstream first processing station (OS; PR) to meet the requirements of the downstream second processing station (FP; PP), and whereby at the upper hierarchical level, a central control unit (5) which overrides the local control unit (LC), carries out central control functions (SC), monitors the function of the individual processing modules (2, 3, 4) and controls the transfer of the film material (N) or of the copying material (M) between the processing modules (2, 3, 4) with a view to optimising the throughput of the film material (N) or of the copying material (M) through the complete processing installation (1).

20. Installation according to Claim 19, characterized in that it includes a processing module (3) with a photographic copying unit (PR) and with a copying material processor (PP), with upstream copying material buffer (PB), for the development of the exposed copying material (M), which items are connected together by means of signal lines, and in that the processing speed of the copying material (M) in the photographic copying unit (PR) can be locally controlled to meet the requirements of the specified constant throughput speed of the copying material process (PP) and the charging level of the copying material buffer (PB).

21. Installation according to Claim 19 or 20, characterized in that it includes a processing module (2) with film opening and splicing station (OS) and with an associated film processor (FP) with upstream film buffer (FB) for the development of the exposed film material (N), which items are connected together by means of signal lines, and in that the processing speed of the film material (N) in the film opening and splicing station (OS) can be locally controlled to meet the requirements of the specified constant throughput speed of the film processor (FP) and the charging level of the film buffer (FB).

22. Installation according to Claim 20 or 21, characterized in that at inlet to the respective buffers (FB; PB) and at outlet from the associated processor (FP; PP), a cutting and splicing appliance (9 or 10) and a docking device above or below the cutting and splicing appliance are respectively arranged for a leader strip (L) which is preferably wound on a reel.

23. Installation according to Claim 22, characterized in that at outlet from the film and copying material processors (FP; PP), respective docking devices are arranged for reels (F; P) and respective winding appliances are arranged for winding up the film or the copying material (N; M) onto the reels (F; P).

24. Installation according to Claim 23, characterized in that at inlet to and outlet from the photographic copying unit (PR), docking appliances are arranged for film material (N) wound on or to be wound on reels (F), and in that at inlet to the copying unit (PR), a setting device is provided for at least one cassette containing unexposed photographic copying material wound on a reel (P).

25. Installation according to Claim 24, characterized that a preferably fully-automatic cutting and packing station (FS) is arranged to be linked with the copying material processor (PP) and in that the individual processing stations (2, 3, 4) are connected together by preferably fully-automatic transport appliances (6, 7 and 8) for the film material reels (F) and the copying material reels (P).

26. Installation according to Claim 25, characterized in that preferably fully-automatically operable transport means (11) for order bags (B) are arranged between the film opening and splicing station (OS) and the cutting and packing station (FS).

27. Installation according to Claim 25 or 26, characterized in that the cutting and packing station is equipped with a printing device (12) for printing the original numbers, preferably on the back of the copies.

## Revendications

1. Procédé d'exploitation d'une installation de traitement photographique (1) qui comporte différents modules de traitement (2,3,4) pour une bande de film photographique exposé (N) et/ou un matériau support de tirage photographique (M) qui sont parcourus successivement par la bande de film (N) ou par le matériau support de tirage (M), et installation de traitement (1) dans le cas de laquelle au moins un module de traitement (2; 3) comprend une première station de traitement (OS; PR), située devant, et une seconde station de traitement (FB; PB) qui est située derrière celle-ci, en passant par un accumulateur tampon (FB; PB) pour la bande de film (N) ou pour le matériau support de tirage (M) et doit être parcourue par la bande de film (N) ou le matériau support de tirage (M) à une vitesse de traitement sensiblement constante, de façon que la bande de film (N) ou le matériau support de tirage (M) parcoure ce module de traitement (2; 3) en ligne, et dans le cas de laquelle sont prévus des foctions de commande locales (LC) et une unité centrale de commande (5), caractérisé par le fait que la bande de film (N) ou le matériau support de tirage (M) parvient hors ligne, sous forme de rouleau, d'un module de traitement à l'autre (2,3,4), que le transport de la bande de film (N) ou du matériau support de tirage (M) dans et entre les modules de traitement (2,3,4) de l'installation de traitement (1) est commandé à deux étages hiérarchiques, procédé dans lequel, sur l'étage hiérarchique inférieur, la vitesse de traitement de la première station de traitement (OS; PR), située devant, est commandée localement, en fonction de la seconde station de traitement (FP ;PP), située derrière, au moyen d'une fonction de commande locale (LC) disposée dans le module de traitement mentionné (2; 3) dont il y a au moins un, et dans lequel, sur l'étage hiérarchique supérieur, au moyen d'une unité de commande centrale (5) ayant autorité sur la fonction de commande locale (LC), des fonctions de commande centrale (SC) sont exercées, le fonctionnement des différents modules de traitement (2,3,4) est surveillé, et le transfert de la bande de film (N) ou du matériau support de tirage (M) entre les modules de traitement (2.3,4) est commandé en vue d'une optimisation du débit de la bande de film (N) ou du matériau support de tirage (M) à travers l'ensemble de l'installation de traitement (1).

2. Procédé selon la revendication 1, caractérisé par le fait que la fonction de commande locale (LC) se fait selon le principe "maître-esclave" (master-slave) et, après le démarrage de l'exploitation d'un module de traitement (2,3), se déroule de soi-même de façon autonome et entièrement automatique.

3. Procédé selon la revendication 1 ou 2, caractérisé par le fait que, dans le cas d'une installation de traitement photographique (1) présentant un module de traitement qui, pour le traitement du matériau support de tirage (M), exposé, comporte une tireuse photographique (PR) ainsi qu'un organe de traitement (PP) du matériau support de tirage, avec un stop tampon (PB) du matériau support de tirage situé devant, qui sont reliés l'un à l'autre par l'intermédiaire de lignes de signaux, la vitesse de traitement du matériau support de tirage (M) dans la tireuse photographique (PR) est commandée localement en fonction de la vitesse de parcours constante prescrite de l'organe de traitement (PP) du matériau support de tirage et de l'état de remplissage du stock tampon (PB) du matériau support de tirage.

4. Procédé selon l'une des revendications 1-3, caractérisé par le fait que, dans le cas d'une installation de traitement photographique (1) présentant un module de traitement qui, pour le traitement de la bande de film exposé (N), comporte au moins une station (OS) d'ouverture et de collage des films ainsi qu'un organe correspondant (FP) de traitement des films avec stock tampon de film (FP) situé devant, qui sont reliés l'un à l'autre par l'intermédiaire de lignes de signaux, la vitesse de traitement de la bande de film (N) dans la station (OS) d'ouverture et de collage des films est commandée localement en fonction de la vitesse de parcours constante prescrite de l'organe (FP) de traitement du film et de l'état de remplissage du stock tampon de film (FB).

5. Procédé selon la revendication 3 ou 4, caractérisé par le fait que la vitesse de traitement de la bande de film (N) dans la station (OS) d'ouverture et de collage des films ou du matériau support de tirage (M) dans la tireuse photographique (PR) est commandée localement de façon que le stock tampon (FB; PB) respectivement associé à la station de traitement suivante (FP; PP), soit rempli à environ 80% jusqu'à environ 99%.

6. Procédé selon la revendication 4 ou 5, caractérisé par le fait que, dans le cas d'une interruption assez longue de l'arrivée du film ou de matériau support de tirage, lors d'un dépassement, par valeur inférieure, de l'état de remplissage du stock tampon correspondant (FP; PB), de préférence d'environ 5% à environ 25% de l'état de remplissage maximal, dans un dispositif de collage (9) à l'entrée du stock tampon respectif (FB; PB), est collée, à l'extrémité du film ou à l'extrémité du matériau support de tirage, une bande amorce (L) qui est à nouveau détachée à la sortie de l'organe (FP; PP) de traitement du film ou du matériau support de tirage et retransportée à l'entrée du stock tampon respectif (FP; PB).

7. Procédé selon la revendication 6, caractérisé par le fait que, lors de la reprise de l'arrivée du film ou du matériau support de tirage au stock tampon respectif (FB; PB), le film ou le matériau support de tirage (N; M) est transporté jusqu'au dispositif de collage (9), la bande amorphe (L) y est détachée, et l'extrémité avant du film ou du matériau support de tirage est collée à l'extrémité arrière de la bande amorce, et qu'à la sortie de l'organe (FP; PP) de traitement du film ou du matériau support de tirage, l'extrémité avant de la bande de film ou de la bande de matériau support de tirage est détachée de la bande amorce.

8. Procédé selon la revendication 7, caractérisé par le fait qu'à la sortie de l'organe (FP; PP) de traitement du film ou du matériau support de tirage, l'extrémité avant de la bande de film ou de la bande du matériau support de tirage est collée à l'extrémité arrière d'une bande de film ou d'une bande de matériau support de tirage qui y est en attente.

9. Procédé selon l'une des revendications 4-8, caractérisé par le fait qu'à la sortie de l'organe de traitement respectif (FP; PP), le film ou le matériau support de tirage (N; M) est enroulé sur des rouleaux (F;P).

10. Procédé selon la revendications 9, caractérisé par le fait que la fonctin centrale de commande (SC) surveille le taux de remplissage des rouleaux de film ou de matériau support de tirage (F; P) disposés à la sortie des organes de traitement respectifs (FP;PP) et commande chacun selon le taux de charge des modules de traitement (2,3,4).

11. Procédé selon la revendication 10, caractérisé par le fait que les rouleaux de film (F) sont transportés, de façon entièrement automatique, depuis l'organe (FP) de traitement du film jusqu'à la tireuse photographique (PR) située dans le module de traitement suivant (3), la fonction centrale de commande (AC) commandant le transport selon chaque fois le besoin et le taux de charge des modules de traitement et que le dispositif de transport (6) situé entre le premier et le second modules de traitement est employé comme stock tampon en transport (TB1) pour les rouleaux de films (F).

12. Procédé selon la revendication 11, caractérisé par le fait qu' à la sortie de la tireuse photographique (PR), la bande de film (N) est enroulée sur des rouleaux (F) et que la fonction centrale de commande (SC) commande d'une part le processus d'enroulement de la bande de film (N) et d'autre part le processus d'enroulement du matériau support de tirage (M) à la sortie de l'organe (PP) de traitement du matériau support de tirage de façon qu'en correspondance avec chaque rouleau de film (F) soit fabriqué un rouleau associé (P) de matériau support de tirage contenant les tirages exposés, procédé dans lequel la succession des négatifs à tirer situés sur le rouleau de film (F) coïncide avec la succession des tirages sur le rouleau (P) de matériau support de tirage et dans lequel de préférence la succession des négatifs à tirer ou des tirages est respectée de façon que ce soient les négatifs à tirer ou les tirages traités d'abord qui se trouvent à l'extérieur sur les rouleaux (F, P).

13. Procédé selon la revendication 12, caractérisé par le fait que la fonction centrale de commande (SC) commande le transport des rouleaux de film, depuis la tireuse photographique, et le transport des rouleaux de matériau support de tirage, depuis la sortie de l'organe de traitement du matériau support de tirage, jusqu'à un module, de préférence entièrement automatique, de coupe et d'emballage situé derrière, de façon que les rouleaux de film et les rouleaux du matériau support de tirage associés arrivent sensiblement en même temps à la station et que les dispositifs de transport (7 ou 8) pour les rouleaux de film (F) ou pour les rouleaux (P) de matériau support de tirage soient employés comme stock tampon en transport (TB2 ou TB3).

14. Procédé selon la revendication 13, caractérisé par le fait que la fonction centrale de commande (SC) commande le transport des pochettes de commande (B) pour les rouleaux de film (C), desquelles les données de commande nécessaires sont prélevées dans la station (OS) d'ouverture et de collage du film, depuis la station (OS) d'ouverture et de collage des films, au moyen de moyens de transport (11) de préférence entièrement automatiques jusqu'au module de coupe et d'emballage, de façon que la succession des pochettes de commande (B) corresponde à la succession des différentes longueurs de matériau support de tirage sur les rouleaux (F) de matériau support de tirage qui sont transportés jusqu'au module de coupe et d'emballage.

15. Procédé selon l'une des revendications précédentes, caractérisé par le fait que différents modules de traitement (2,3,4) transmettent, par l'intermédiaire des lignes de signaux, à l'unité centrale de commande (5) des informations concernant une commande de client qui se trouve précisément à la station respective de façon qu'à l'aide de la fonction centrale de commande (SC) une commande de client déterminée puisse à tout moment être localisée à l'intérieur de l'installation de traitement photographique (1).

16. Procédé selon la revendication 15, caractérisé par le fait qu'une commande de client entrée la première dans l'installation de traitement photographique (1) la quitte également la première à l'état traité.

17. Procédé selon l'une des revendications 13-16, caractérisé par le fait que la fonction centrale de commande (SC) enregistre les coordonnées de position, déterminées dans la tireuse photographique (PR), des différents négatifs à tirer situés sur le film (N) et les transmet à la station de coupe et d'emballage (FS), où le film (N) est alors coupé à l'endroit correct.

18. Procédé selon l'une des revendications 13-17, caractérisé par le fait que la fonction centrale de commande (SC) enregistre les numéros, saisis dans la tireuse photographique (PR), par exemple par lecture du code DX étendu disposé sur le film (N), des différents négatifs à tirer situés sur le film (M) et transmet ces données par exemple à la station de coupe et d'emballage (FS), où le numéro de négatif correspondant s'imprime sur la face avant ou la face arrière du ou des tirages correspondants, par exemple à l'aide d'une imprimante (12).

19. Installation de traitement photographique qui comporte différents modules de traitement (2,3,4) pour une bande de film photographique exposé (N) et/ou un matériau support de tirage photographique (M) qui sont parcourus successivement par la bande de film (N) ou par le matériau support de tirage (M), et installation de traitement (1) dans le cas de laquelle au moins un module de traitement (2; 3) comprend une première station de traitement (OS; PR), située devant, et une seconde station de traitement (FB; PB) qui est située derrière celle-ci, en passant par un accumulateur tampon (FB; PB) pour la bande de film (N) ou pour le matériau support de tirage (M) et doit être parcourue par la bande de film (N) ou le matériau support de tirage (M) à une vitesse de traitement sensiblement constante, de façon que la bande de film (N) ou le matériau support de tirage (M) parcoure ce module de traitement (2; 3) en ligne, et dans le cas de laquelle sont prévus des fonctions de commande locaux (LC) et une unité centrale de commande (5), caractérisée par le fait que la bande de film (N) ou le matériau support de tirage (M) parvient sous forme de rouleaux, hors ligne, de l'un à l'autre module de traitement (2,3,4), que, pour le transport de la bande de film (M) ou du matériau support de tirage (M) dans et entre les modules de traitement (2,3,4) de l'installation de traitement (1) est prévue une fonction de commande à deux étages hiérarchiques, installation dans laquelle, sur l'étage hiérarchique inférieur, une fonction de commande locale (Lc), disposée dans le module de traitement mentionné (2;3) dont il y a au moins un, commande localement la vitesse de traitement de la première station de travail (OS; PR), située devant, en fonction de la seconde station de travail (FP;PP), située derrière, et dans laquelle, sur l'étage hiérarchique supérieur, une unité centrale de commande (5), ayant autorité sur la fonction de commande locale (LC), exerce des fonctions de commande centrales (SC), surveille le fonctionnement des différents modules de traitement (2,3,4) et commande le transfert de la bande de film (N) ou du matériau support de tirage (M) entre les modules de traitement (2,3,4) en vue d'une optimisation du débit de la bande de film (M) ou du matériau support de tirage (M) à travers l'ensemble de l'installation de traitement (1).

20. Installation selon la revendication 19, caractérisée par le fait que, pour le traitement du matériau support de tirage (M), exposé, elle comporte un module de traitement (3) présentant une tireuse photographique (PR) ainsi qu'un organe (PB) de traitement du matériau support de tirage avec un stock tampon (PB) du matériau support de tirage situé devant, qui sont reliés l'un à l'autre par l'intermédiaire de lignes de signaux, et que la vitesse de traitement du matériau support de tirage (M) dans la tireuse photographique (PR) peut être commandée localement en fonction de la vitesse de parcours constante prescrite de l'organe (PB) de traitement du matériau support de tirage et de l'état de remplissage du stock tampon (PB) de matériau support de tirage.

21. Installation selon la revendication 19 ou 20, caractérisée par le fait que, pour le traitement de la bande de film exposé (M), elle comporte un module de traitement (2) présentant une station d'ouverture et de collage du film (OS) ainsi qu'un organe (FP) de traitement du film associé avec un stock tampon (FP) de film situé devant, qui sont reliés l'un à l'autre par l'intermédiaire de lignes de signaux, et que la vitesse de traitement de la bande de film (N) dans la station d'ouverture et de collage du film (OS) peut être localement commandée en fonction de la vitesse de parcours constante prescrite de l'organe (FP) de traitement du film et de l'état de remplissage du stock tampon de film (FB).

22. Installation selon la revendication 20 ou 21, caractérisée par le fait qu'à l'entrée de chacun des stocks tampons (FB;PB) et à la sortie de chacun des organes de traitement correspondants (FP; PP) est disposé un dispositif de coupe et de collage (9,10) ainsi qu'un dispositif d'amorçage d'enroulement, prévu au-dessus ou au-dessous du dispositif de coupe et de collage, pour une bande amorphe (L), de préférence enroulée sur un rouleau.

23. Installation selon la revendication 22, caractérisée par le fait qu'à la sortie de l'organe de traitement du film ou de l'organe de traitement du matériau de support de tirage (FP; PP) est disposé un dispositif d'amorçage d'enroulement pour des rouleaux (F;P) et un dispositif d'enroulement pour enrouler le film ou le matériau support de tirage (N; M) sur les rouleaux (F; P).

24. Installation selon la revendication 23, caractérisée par le fait qu'à l'entrée et à la sortie de la tireuse photographique (PR) sont disposés des dispositifs d'amorçage d'enroulement pour une bande de film (M) enroulée ou à enrouler sur des rouleaux (F) et qu'à l'entrée de la tireuse (PR) est prévu un dispositif de mise en place pour au moins une cassette contenant du matériau support de tirage photographique, non exposé, enroulé sur un rouleau (P).

25. Installation selon la revendication 24, caractérisée par le fait qu'à la suite de l'organe (PP) de traitement du matériau support de tirage est disposée une station de coupe et d'emballage (FS), de préférence entièrement automatique, et que les différentes stations de traitement (2,3,4) sont reliées l'une à l'autre par des dispositifs de transport (6,7,8), de préférence entièrement automatiques, pour les rouleaux de film (F) ou les rouleaux de matériau support de tirage (P).

26. Installation selon la revendication 25, caractérisée par le fait qu'entre la station d'ouverture et de collage de film (OS) et la station de coupe et d'emballage (FS) sont disposés des moyens de transport (11), de préférence exploitables de façon entièrement automatique, pour des pochettes de commande (B).

27. Installation selon la revendication 25 ou 26, caractérisée par le fait que la station de coupe et d'emballage est équipée d'une imprimante (12) pour imprimer les numéros de négatifs, de préférence sur la face arrière du tirage.
